(19) Europäisches Patentamt
European Patent Office
Office européen des brevets

(11) **EP 3 482 487 B1**

(12) **FASCICULE DE BREVET EUROPEEN**

(45) Date de publication et mention
de la délivrance du brevet:
**23.03.2022 Bulletin 2022/12**

(21) Numéro de dépôt: **17745819.7**

(22) Date de dépôt: **03.07.2017**

(51) Classification Internationale des Brevets (IPC):
***H02M 7/483*** (2007.01)

(52) Classification Coopérative des Brevets (CPC):
**H02M 7/483; H02M 7/4835**

(86) Numéro de dépôt international:
**PCT/FR2017/051803**

(87) Numéro de publication internationale:
**WO 2018/007741 (11.01.2018 Gazette 2018/02)**

(54) **MODULE DE CONTRÔLE DE L'ÉNERGIE INTERNE D'UN CONVERTISSEUR**

MODUL ZUR STEUERUNG DER INNEREN ENERGIE EINES UMRICHTERS

MODULE FOR CONTROLLING THE INTERNAL ENERGY OF A CONVERTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.07.2016 FR 1656432**

(43) Date de publication de la demande:
**15.05.2019 Bulletin 2019/20**

(73) Titulaires:
• **Supergrid Institute**
**69100 Villeurbanne (FR)**
• **CentraleSupélec**
**91190 - Gif sur Yvette (FR)**

(72) Inventeurs:
• **SHINODA, Kosei**
**69001 LYON (FR)**
• **BENCHAIB, Abdelkrim**
**78180 MONTIGNY LE BRETONNEUX (FR)**
• **GUILLAUD, Xavier**
**59830 BACHY (FR)**
• **DAI, Jing**
**91190 GIF-SUR-YVETTE (FR)**

(74) Mandataire: **Cabinet Beau de Loménie**
**Immeuble Eurocentre**
**179 Boulevard de Turin**
**59777 Lille (FR)**

(56) Documents cités:
**US-A1- 2015 062 991**

• **GUO JIE ET AL: "Energy storable VSC-HVDC system based on modular multilevel converter", INTERNATIONAL JOURNAL OF ELECTRICAL POWER & ENERGY SYSTEMS, JORDAN HILL, OXFORD, GB, vol. 78, 17 décembre 2015 (2015-12-17), pages 269-276, XP029404255, ISSN: 0142-0615, DOI: 10.1016/J.IJEPES.2015.11.074**
• **S. SAMIMI ET AL: "Control of DC bus voltage with a Modular Multilevel Converter", 2015 IEEE EINDHOVEN POWERTECH, 1 juin 2015 (2015-06-01), pages 1-6, XP055278812, DOI: 10.1109/PTC.2015.7232570 ISBN: 978-1-4799-7693-5**

**Description**

Arrière-plan de l'invention

La présente invention concerne le domaine technique des convertisseurs modulaires multi-niveaux (MMC) assurant la conversion d'un courant alternatif en un courant continu et inversement.

Elle concerne plus précisément les réseaux de transport haute tension à courant continu (HVDC) utilisant un courant continu pour la transmission de l'énergie électrique et dans lesquels des stations intègrent des convertisseurs modulaires multi-niveaux.

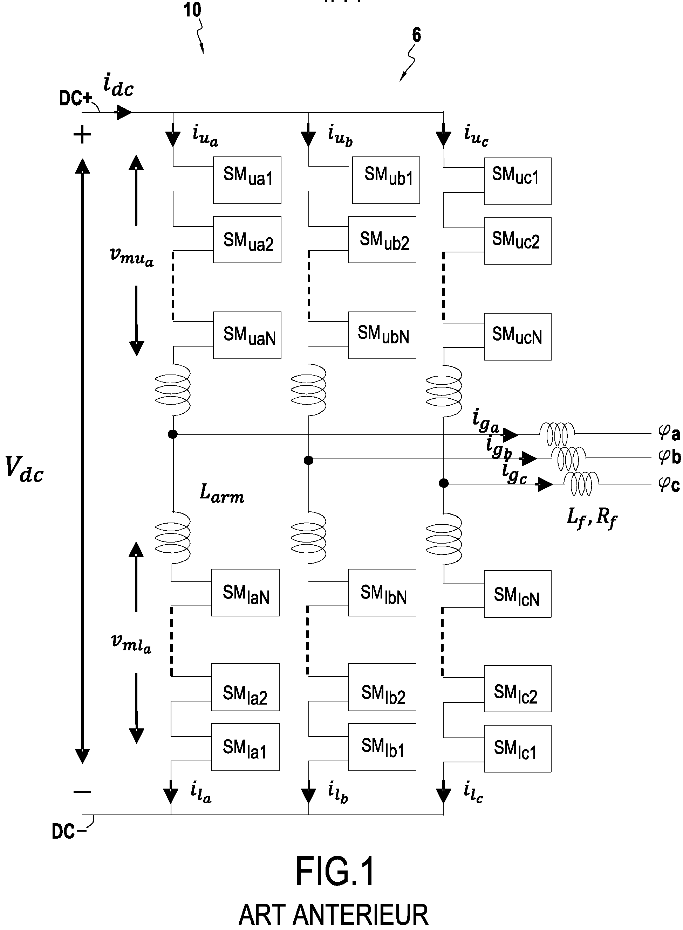

Sur la figure **1**, on a représenté de manière schématique un ensemble **6** de sous-modules d'un convertisseur modulaire multi-niveaux **10** selon la technique antérieure. Ce convertisseur **10** comporte, pour un courant triphasé d'entrée/sortie (comportant trois phases $\varphi_a$, $\varphi_b$ et $\varphi_c$), trois bras de conversion qui sont référencés par les indices a, *b* et c sur les différents composants de la figure **1**. Chaque bras de conversion comprend un demi-bras supérieur et un demi-bras inférieur (indiqués par les indices « u » pour supérieur et « l » pour inférieur), dont chacun relie une borne DC+ ou DC- du réseau d'alimentation électrique continu (DC) à une borne du réseau d'alimentation électrique alternatif (AC). En particulier, chacun des bras est connecté à une des trois lignes de phase $\varphi_a$, $\varphi_b$ et $\varphi_c$ du réseau d'alimentation électrique alternatif. Il est à noter que les termes « bras » et « demi-bras » sont traduits en anglais respectivement par « leg » et « arm ». La figure **1** représente un ensemble **6** de sous-module, dans lequel chaque demi-bras est traversé par un courant $i_{xi}$ avec (x indiquant si le demi-bras est supérieur ou inférieur et l'indice *i* indiquant le bras). En outre, chaque demi-bras comprend une pluralité de sous-modules $SM_{xij}$ qui peuvent être commandés suivant une séquence souhaitée (avec *x* indiquant si le demi-bras est supérieur ou inférieur, *i* indiquant la ligne de phase à laquelle le demi-bras est associé, et j étant le numéro du sous-module parmi les sous-modules en série dans le demi-bras). Ici, seuls trois sous-modules ont été représentés par demi-bras. En pratique, chaque demi-bras inférieur ou supérieur peut comporter un nombre N de sous-modules, pouvant aller de quelques dizaines à quelques centaines. Chaque sous-module $SM_{xij}$ comporte un système de stockage d'énergie tel qu'au moins un condensateur et un organe de commande pour connecter sélectivement ce condensateur en série entre les bornes du sous-module ou pour le contourner. Les sous-modules sont commandés selon une séquence choisie pour faire varier progressivement le nombre d'éléments de stockage d'énergie qui sont connectés en série dans un demi-bras du convertisseur **10** de façon à fournir plusieurs niveaux de tension. En outre, sur la figure **1**, $V_{dc}$ désigne la tension aux points de connexion du convertisseur au réseau d'alimentation électrique continu, ces points étant visés par l'expression anglo-saxone « PCC : Point of Common Coupling », bien connue de l'homme du métier. $i_{dc}$ désigne le courant du réseau d'alimentation électrique continu, tandis que des courants $i_{ga}$, $i_{gb}$ et $i_{gc}$ traversent les trois lignes de phase $\varphi_a$, $\varphi_b$ et $\varphi_c$. De plus, chaque demi-bras possède une inductance $L_{arm}$ et chaque ligne de phase comporte une inductance $L_f$ et une résistance $R_f$

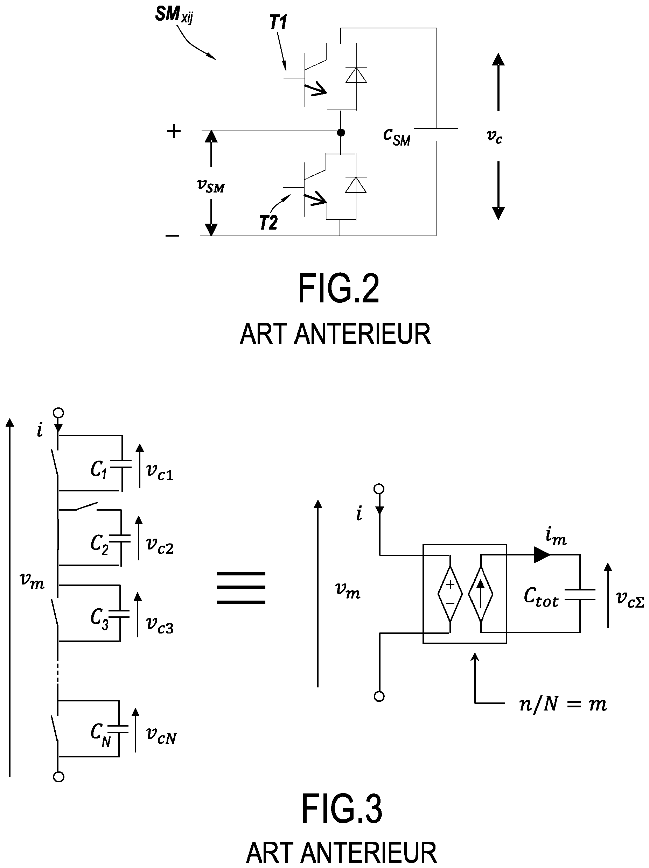

La figure **2** illustre un sous-module $SM_{xij}$ selon l'art antérieur appartenant au convertisseur **10** de la figure **1**. Dans ce sous-module, chaque organe de commande comporte un premier élément de commutation électronique **T1** tel qu'un transistor bipolaire à grille isolée (« IGBT : Insulated Gâte Bipolar Transistor » en langue anglaise) connecté en série avec un élément de stockage d'une énergie électrique, ici un condensateur $C_{SM}$. Ce premier élément de commutation **T1** et ce condensateur $C_{SM}$ sont montés en parallèle d'un deuxième élément de commutation électronique **T2**, également un transistor bipolaire à grille isolée (IGBT). Ce deuxième élément de commutation électronique **T2** est couplé entre les bornes d'entrée et de sortie du sous-module $SM_{xij}$. Les premier et deuxième éléments de commutation **T1** et **T2** sont tous deux associés à une diode antiparallèle représentée sur la figure **2**.

En fonctionnement, le sous-module peut être commandé dans deux états de commande.

Dans un premier état dit état « on » ou commandé, le premier élément de commutation **T1** et le deuxième élément de commutation **T2** sont configurés de manière à connecter l'élément de stockage d'énergie $C_{SM}$ en série avec les autres sous-modules. Dans un deuxième état dit état « off » ou non-commandé, le premier élément de commutation **T1** et le deuxième élément de commutation **T2** sont configurés de sorte à court-circuiter l'élément de stockage d'énergie $C_{SM}$.

Il est connu que chaque demi-bras, ayant une tension $v_m$ à ses bornes, peut être modélisé par une source de tension modélisée, ayant une tension $v_m$ à ses bornes, dont le rapport cyclique dépend du nombre de sous-modules commandés, et par un condensateur $C_{tot}$ modélisé connecté à la source de tension. Cette modélisation a été schématisée en figure **3**, sur laquelle on voit un demi-bras, traversé par un courant *i* et la modélisation obtenue. L'inverse de la capacité équivalente du condensateur modélisé $C_{tot}$ est égale à la somme des inverses des capacités des sous-modules commandés, de sorte que :

$$\frac{1}{C_{tot}} = \frac{1}{C_1} + \frac{1}{C_2} + \cdots + \frac{1}{C_N}$$

où $C_1$, $C_2$, ..., $C_j$, ..., $C_N$ sont les capacités du $j^{ème}$ condensateur.

Ainsi, la tension $v_{c\Sigma}$ aux bornes du condensateur $\boldsymbol{C_{tot}}$ modélisé est égale à la somme des tensions $v_{cj}$ aux bornes des condensateurs des sous-modules dans le demi-bras (avec j allant de 1 à N et indiquant le numéro du condensateur et donc du sous-module). En outre, chaque condensateur $\boldsymbol{C_{tot}}$ est traversé par un courant $i_m$. Dans la présente demande, par abus de langage, $\boldsymbol{C_{tot}}$ désigne à la fois le condensateur modélisé et la valeur de sa capacité. En contrôlant la séquence de commande des sous-modules, afin de faire varier progressivement le nombre d'éléments de stockage d'énergie connectés en série, l'énergie du condensateur $\boldsymbol{C_{tot}}$ modélisé et donc la tension aux bornes de chaque source de tension modélisée peuvent être diminuées ou augmentées.

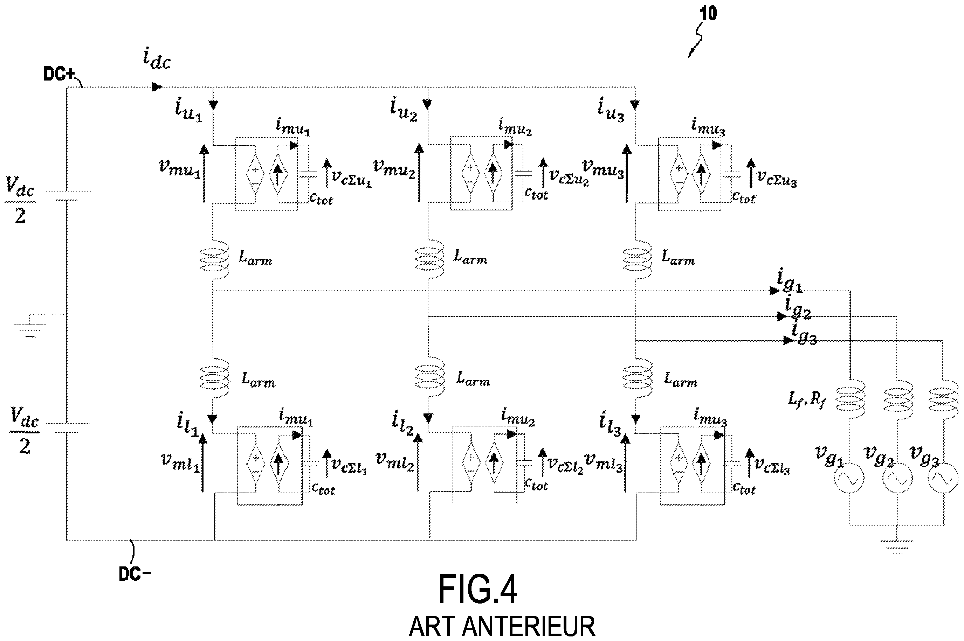

Dans l'art antérieur, on trouve donc une configuration équivalente de l'ensemble **6** des sous-modules du convertisseur MMC **10** illustrée en figure **4**. Sur cette figure, le convertisseur est un convertisseur analogue à celui décrit en référence à la figure **1**, et dans lequel chaque demi-bras a été remplacé par sa modélisation. En outre, chaque ligne de phase du réseau d'alimentation électrique alternatif est associée à un courant $i_{gi}$ et une tension $v_{gi}$ (l'indice i indiquant le numéro du bras).

Ici, chacune des sources de tension modélisées comporte en ses bornes une tension $v_{mxi}$ et chaque condensateur modélisé $C_{tot}$ est traversé par un courant $i_{mxi}$ et comporte en ses bornes une tension $v_{c\Sigma xi}$ (avec x indiquant si le demi-bras est supérieur ou inférieur et i indiquant le numéro du bras). On peut par ailleurs noter qu'il est possible de décomposer le convertisseur MMC en une partie alternative imaginaire et une partie continue imaginaire (en entrée ou en sortie, suivant que le convertisseur est configuré pour convertir une énergie alternative en énergie continue ou l'inverse), où l'évolution de l'énergie totale stockée dans les condensateurs des sous-modules est égale à la différence entre la puissance entrant dans le convertisseur et la puissance sortante.

Il est connu que dans ce type de convertisseurs MMC, l'énergie interne, stockée dans les condensateurs des sous-modules, est découplée de la tension du réseau d'alimentation électrique continu. Aussi, l'énergie interne stockée dans les condensateurs des convertisseurs MMC peut être régulée indépendamment. Ceci permet notamment aux convertisseurs MMC de contribuer à la stabilité des réseaux d'alimentation électrique continu et alternatif associés en fournissant ou en prélevant de l'énergie sur lesdits réseaux d'alimentations électrique.

On comprend donc que les échanges de puissance entre les réseaux d'alimentation électrique continu et/ou alternatif et le convertisseur MMC entrainent une augmentation ou une diminution de l'énergie interne stockée dans les condensateurs du convertisseur.

L'énergie interne du convertisseur a un impact sur la stabilité des réseaux d'alimentation électrique continu et alternatif. En outre, il est connu que la tension totale des condensateurs du convertisseur est amenée à osciller en raison des échanges de puissance entre les réseaux d'alimentation électrique continu et alternatif. Ces oscillations ont pour conséquence de menacer le bon fonctionnement du convertisseur en ne respectant pas ses contraintes de fonctionnement. Les solutions de l'art antérieur ne tiennent pas compte de ces oscillations, ce qui risque d'endommager le convertisseur. Ces solutions ne permettent donc pas d'exploiter pleinement les capacités des convertisseurs MMC en termes de contrôle de l'énergie interne du convertisseur.

Les documents suivants :

GUO JIE ET AL: "Energy storable VSC-HVDC system based on modular multilevel converter",INTERNATIONAL JOURNAL OF ELECTRICAL POWER & ENERGY SYSTEMS, JORDAN HILL, OXFORD, GB, vol. 78, 17 décembre 2015 (2015-12-17), pages 269-276;
S. SAMIMI ET AL: "Control of DC bus voltage with a Modular Multilevel Converter",2015 IEEE EINDHOVEN POWERTECH, 1 juin 2015 (2015-06-01), pages 1-6; et
US 2015/062991 font partie de l'art antérieur de la présente demande.

Objet et résumé de l'invention

Un but de la présente invention est de proposer un convertisseur modulaire multi-niveaux (MMC), remédiant aux problèmes précités et permettant d'exploiter pleinement le potentiel du convertisseur MMC.

Pour ce faire, l'invention porte sur un convertisseur de tension modulaire multi-niveaux permettant de convertir une tension alternative en une tension continue et inversement, comportant une partie dite continue destinée à être reliée à un réseau d'alimentation électrique continu et une partie dite alternative destinée à être reliée à un réseau d'alimentation électrique alternatif, le convertisseur comportant une pluralité de bras, chaque bras comportant un demi-bras supérieur et un demi-bras inférieur, chaque demi-bras comprenant une pluralité de sous-modules commandables individuellement par un organe de commande propre à chaque sous-module et chaque sous-module comprenant un condensateur connectable en série dans le demi-bras lorsque l'organe de commande du sous-module est dans un état commandé.

Selon une caractéristique générale du convertisseur, ledit convertisseur comporte un module de contrôle configuré pour réguler l'énergie interne stockée dans les condensateurs des sous-modules d'un demi-bras supérieur ou inférieur du convertisseur, le module de contrôle étant apte à limiter ladite énergie interne en-dessous d'une limite supérieure et/ou au-dessus d'une limite inférieure, en utilisant des paramètres mesurés sur le réseau d'alimentation électrique continu et sur le réseau d'alimentation électrique alternatif ainsi que des consignes de puissance de fonctionnement du convertisseur.

De préférence, et de manière non limitative, les sous-modules sont commandés aux moyens de deux transistors bipolaires à grille isolée (IGBT) permettant de placer ou non en série le condensateur dudit sous-module dans le demi-bras associé suivant que l'on souhaite placer le sous-module dans l'état commandé « on » ou dans l'état non-commandé « off ».

Chaque demi-bras peut être modélisé par une source de tension modélisée associée en parallèle à un condensateur modélisé de capacité $C_{tot}$. On notera $v_{c\Sigma}$ la somme des tensions des condensateurs des sous-modules d'un demi-bras, de sorte que la tension aux bornes du condensateur modélisé associé en parallèle à la source de tension modélisée vaut $v_{c\Sigma}$. En outre, la source de tension modélisée comporte une tension $v_m$ à ses bornes, également appelée tension insérée dans un demi-bras, et est caractérisée par un rapport cyclique dépendant du nombre de sous-modules commandés.

De préférence, le rapport cyclique $\alpha$, associé à la source de tension modélisée, est calculé d'après l'expression :

$$\alpha = \frac{n}{N}$$

où n est le nombre de sous-modules connectés à l'état « on » dans le demi-bras associé et N est le nombre de sous-modules dans le demi-bras.

On comprend que ladite limite inférieure et/ou ladite limite supérieure de l'énergie interne sont déterminées de sorte à maintenir l'énergie interne, stockée dans les condensateurs des sous-modules du convertisseur, à un niveau adapté au bon fonctionnement dudit convertisseur. Ceci permet d'éviter d'endommager le convertisseur et permet d'exploiter pleinement ses capacités.

Sans sortir du cadre de l'invention, le module de contrôle peut être configuré pour réguler l'énergie interne uniquement en-dessous d'une limite supérieure, uniquement au-dessus d'une limite inférieure ou encore entre une limite supérieure et une limite inférieure.

En outre, ladite limite inférieure et/ou ladite limite supérieure de l'énergie interne peuvent être choisies de manière à prendre en compte les oscillations de la tension totale des condensateurs. Aussi, malgré ces oscillations inévitables, l'énergie interne est maintenue par le module de contrôle au-dessus de ladite limite inférieure et/ou en-dessous de ladite limite supérieur, de sorte que le fonctionnement du convertisseur n'est pas perturbé.

De préférence, la limite inférieure de l'énergie interne est déterminée d'après une condition à respecter concernant la tension insérée $v_m$. En effet, pour garantir le bon fonctionnement du convertisseur, la tension insérée $v_m$ dans un demi-bras est limitée physiquement par la somme des tensions $v_{c\Sigma}$ des sous-modules dans ce demi-bras. Aussi, pour respecter cette contrainte physique, la consigne de la tension insérée $v_m^*$ doit satisfaire, à chaque instant t, l'inéquation suivante :

$$\frac{v_m^*(t)}{v_{c\Sigma}(t)} \leq 1$$

où est $\frac{v_m^*(t)}{v_{c\Sigma}(t)}$ désigne l'indice de modulation m.

Le module de contrôle selon l'invention permet de réguler l'énergie interne de manière à conserver cette inégalité, même en cas de pic d'oscillation de la tension totale des condensateurs.

Encore de préférence, la limite supérieure de l'énergie interne est déterminée à partir de la limite de tension des éléments de commutation des sous-modules. En effet, pour garantir le bon fonctionnement du convertisseur, la tension d'un condensateur $v_{cj}$ d'un sous-module doit à chaque instant t être inférieure à une tension maximale $v_{cMax}$ correspondant à la limite de tension des éléments de commutation dudit sous-module, d'après :

$$v_{ci}(t) \leq v_{cMax}$$

et donc :

$$v_{c\Sigma}(t) \leq N v_{cMax}$$

En particulier, cette limite de tension des éléments de commutation présente une marge de sécurité dite limite de tension de sécurité.

Lorsque l'énergie interne atteint la limite supérieure ou la limite inférieure, le module de contrôle corrige l'énergie interne pour la ramener respectivement en-dessous de la limite supérieure ou au-dessus de la limite inférieure.

En utilisant des paramètres mesurés sur le réseau d'alimentation électrique continu et sur le réseau d'alimentation électrique alternatif, le module de contrôle détermine la limite inférieure et/ou la limite supérieure de l'énergie interne en s'adaptant à l'état des réseaux d'alimentation électrique continu et alternatif. On comprend que la limite inférieure et/ou la limite supérieure ne sont pas fixes et évoluent avec l'état des réseaux d'alimentation électrique.

De préférence, mais de manière non limitative, ces paramètres sont mesurés en temps réel sur les réseaux d'alimentation électrique, grâce à quoi la limite inférieure et/ou la limite supérieure sont asservies en temps réel et est adaptées à l'état des réseaux d'alimentation électrique à chaque instant. Un intérêt de ce mode de réalisation préférentiel est d'améliorer notamment la précision de la/des limites déterminées et ainsi de réduire les risques d'endommagement du convertisseur.

En outre, l'utilisation de consignes de puissance de fonctionnement du convertisseur permet de prendre également en compte les points de fonctionnement du convertisseur pour déterminer la limite inférieure et/ou la limite supérieure. De cette manière, l'énergie interne et les capacités de stockage de ladite énergie interne du convertisseur sont mieux contrôlées, grâce à quoi on exploite davantage le potentiel du convertisseur MMC.

De manière avantageuse, lesdits paramètres mesurés sur le réseau d'alimentation électrique continu et sur le réseau d'alimentation électrique alternatif comprennent une valeur de tension $v_g$ mesurée sur le réseau d'alimentation électrique alternatif et une valeur de tension $V_{dc}$ mesurée sur le réseau d'alimentation électrique continu. $v_g$ et $V_{dc}$ traduisent l'état de fonctionnement respectivement du réseau d'alimentation électrique alternatif et du réseau d'alimentation électrique continu.

Préférentiellement, les consignes de puissance de fonctionnement du convertisseur comprennent une consigne de puissance alternative active $P_{ac}^*$, une consigne de puissance alternative réactive $Q_{ac}^*$ et une consigne de puissance continue $P_{dc}^*$. Ces consignes traduisent les points de fonctionnement du convertisseur en termes de puissance.

De manière avantageuse, le module de contrôle est configuré pour calculer des variables intermédiaires en fonction desdits paramètres mesurés sur le réseau d'alimentation électrique continu et sur le réseau d'alimentation électrique alternatif ainsi qu'en fonction desdites consignes de puissance de fonctionnement du convertisseur. De manière non limitative, une analyse mathématique permet de déterminer les relations mathématiques liant lesdites variables intermédiaires auxdits paramètres et auxdites consignes de puissance. De préférence, pour simplifier l'analyse mathématique, on considère que le module de contrôle est une boucle de commande suffisamment rapide pour approximer que les consignes sont égales aux valeurs réelles qui leurs sont associées.

Avantageusement, les variables intermédiaires comportent une variable de courant différentiel équivalente $I_{diff}$, représentant la contribution par une phase, dans un système triphasé équilibré, au courant du réseau d'alimentation électrique continu en régime permanent, déterminée au moyen de la fonction :

$$I_{diff} = \frac{P_{dc}}{3V_{dc}}$$

De préférence, les variables intermédiaires comportent une variable de tension différentielle équivalente $V_{diff}$, représentant la tension aux bornes de la partie continue du convertisseur en régime permanent, déterminée au moyen de la fonction :

$$V_{diff} = \frac{V_{dc}}{2} - I_{diff}R_{arm}$$

où $R_{arm}$ est la résistance dans un demi-bras du convertisseur.

De manière avantageuse, les variables intermédiaires comportent une variable de courant intermédiaire équivalente $I_g$, représentant le courant circulant vers le réseau d'alimentation électrique alternatif en régime permanent, déterminée au moyen de la fonction :

$$I_g = \frac{\sqrt{P_{ac}^2 + Q_{ac}^2}}{3V_g}$$

où $V_g$ représente la tension du réseau d'alimentation électrique alternatif en régime permanent.

Préférentiellement, les variables intermédiaires comportent une variable de déphasage $\theta$ entre le vecteur de la tension du réseau d'alimentation électrique alternatif et le vecteur du courant circulant vers le réseau d'alimentation électrique alternatif. En outre, $\theta$ peut être déterminée d'après :

$$\theta = \tan^{-1}(-\frac{Q_{ac}}{P_{ac}}) \quad si\ P_{ac} > 0$$

$$\theta = \tan^{-1}(-\frac{Q_{ac}}{P_{ac}}) + \pi \quad si\ P_{ac} < 0$$

Avantageusement, les variables intermédiaires comportent une variable angulaire intermédiaire $\delta$, représentant le déphasage entre le vecteur de la tension du réseau d'alimentation électrique alternatif en régime permanent et le vecteur d'une tension interne alternative équivalente synthétisée par le convertisseur en régime permanent, $\delta$ étant déterminée au moyen de la fonction :

$$\delta = \tan^{-1}\frac{X_{eq}P_{ac} - R_{eq}Q_{ac}}{R_{eq}P_{ac} + X_{eq}Q_{ac} + 3V_g^2}$$

où $V_g$ est la tension du réseau d'alimentation électrique alternatif en régime permanent, $R_{eq}$ est la résistance équivalente dans un demi-bras et $X_{eq}$ est la réactance équivalente dans un demi-bras.

De manière non limitative, on pose $R_{eq} = R_f + \frac{R_{arm}}{2}$ et $X_{eq} = X_f + \frac{X_{arm}}{2} = \omega L_f + \frac{\omega L_{arm}}{2}$ , où $L_{arm}$ et $R_{arm}$ désignent respectivement l'inductance et la résistance dans un demi-bras, $L_f$ et $R_f$ désignent respectivement l'inductance et la résistance dans une ligne de phase et $\omega$ est la pulsation.

De préférence, les variables intermédiaires comportent une variable de tension interne alternative équivalente $V_v$, synthétisée par le convertisseur en régime permanent, au moyen de la fonction :

$$V_v = \sqrt{(\frac{R_{eq}P_{ac} + X_{eq}Q_{ac}}{3V_g} + V_g)^2 + (\frac{X_{eq}P_{ac} - R_{eq}Q_{ac}}{3V_g})^2}$$

où $V_g$ représente la tension du réseau d'alimentation électrique alternatif en régime permanent, $R_{eq}$ est la résistance équivalente dans un demi-bras et $X_{eq}$ est la réactance équivalente dans un demi-bras.

Selon un aspect particulièrement avantageux de l'invention, le module de contrôle est configuré pour déterminer la composante oscillatoire de l'énergie interne $W_{ru}^{\Sigma}(t)$ stockée dans les condensateurs d'un demi-bras supérieur du convertisseur au moyen de la fonction :

$$W_{ru}^{\Sigma}(t) = -\frac{\sqrt{2}I_{diff}V_v}{\omega}\sin(\omega t + \delta) + \frac{\sqrt{2}I_g V_{diff}}{2\omega}\sin(\omega t + \theta)$$
$$-\frac{I_g V_v}{4\omega}\sin(2\omega t + \delta + \theta)$$

où $\omega$ est la pulsation. Cette composante oscillatoire de l'énergie interne traduit les oscillations intrinsèques de la tension totale des condensateurs d'un demi-bras supérieur du convertisseur et donc de l'énergie interne stockée dans lesdits condensateurs. Ces oscillations sont causées par les échanges de puissance entre les réseaux d'alimentation électrique continu et alternatif et le convertisseur.

En outre, l'énergie interne dans un demi-bras supérieur peut s'exprimer comme la somme de la composante oscillatoire $W_{ru}^{\Sigma}(t)$ de l'énergie interne dans ce demi-bras supérieur et de la moyenne temporelle de l'énergie interne dans ce demi-bras.

En variante, le module de contrôle est configuré pour déterminer la composante oscillatoire de l'énergie interne $W_{rl}^{\Sigma}(t)$ stockée dans les condensateurs d'un demi-bras inférieur du convertisseur au moyen de la fonction :

$$W_{rl}^{\Sigma}(t) = \frac{\sqrt{2}I_{diff}V_v}{\omega}\sin(\omega t + \delta) - \frac{\sqrt{2}I_gV_{diff}}{2\omega}\sin(\omega t + \theta)$$
$$-\frac{I_gV_v}{4\omega}\sin(2\omega t + \delta + \theta)$$

De manière avantageuse, le module de contrôle est configuré pour déterminer la limite inférieure $W_{Lminu}^{\Sigma}$ de l'énergie interne stockée dans les condensateurs des sous-modules d'un demi-bras supérieur du convertisseur, au moyen de la fonction:

$$W_{Lminu}^{\Sigma} = \frac{C_{tot}}{2}\left(V_{diff} - \sqrt{2}V_v\cos(\omega t_m + \delta)\right)^2 - W_{ru}^{\Sigma}(t_m)$$

où $C_{tot}$ est la somme des capacités des condensateurs dans le demi-bras supérieur et où $t_m$ est un instant déterminé pour lequel l'énergie interne dans le demi-bras supérieur atteint la limite inférieure $W_{Lminu}^{\Sigma}$ et cet instant est obtenu par la formule :

$$t_m = \frac{1}{\omega}\left(\pi - \sin^{-1}(\frac{I_{diff}}{\sqrt{A_t^2 + B_t^2}}) - \tan^{-1}(\frac{B_t}{A_t})\ \right) + \frac{2k\pi}{\omega}$$

avec :

$$A_t = \sqrt{2}\omega C_{tot}V_v\cos\delta + \frac{I_g}{\sqrt{2}}\sin\theta$$

$$B_t = \sqrt{2}\omega C_{tot}V_v\sin\delta - \frac{I_g}{\sqrt{2}}\cos\theta$$

En variante, le module de contrôle est configuré pour déterminer la limite inférieure $W_{Lminl}^{\Sigma}$ de l'énergie interne stockée dans les condensateurs des sous-modules d'un demi-bras inférieur du convertisseur. L'expression de ladite limite inférieure $W_{Lminl}^{\Sigma}$ peut être déterminée en utilisant la symétrie entre les demi-bras supérieur et inférieur. Dans cette expression, la valeur des contraintes est identique à la valeur des contraintes relatives au demi-bras supérieur.

Sans sortir du cadre de l'invention, la limite inférieure de l'énergie interne stockée dans les condensateurs d'un demi-bras supérieur ou inférieur peut être déterminée à l'aide d'une approche prenant en compte la configuration la plus défavorable, atteinte à l'instant $t_m$, pour laquelle l'égalité suivante est vérifiée :

$$\frac{v_m(t_m)}{v_{c\Sigma}(t_m)} = 1$$

Dans cette configuration défavorable, l'énergie interne dans un demi-bras supérieur ou inférieur atteint ladite limite inférieure.

Avantageusement, le module de contrôle est configuré pour déterminer la limite supérieure $W_{Lmaxu}^{\Sigma}$ de l'énergie interne stockée dans les condensateurs des sous-modules d'un demi-bras supérieur du convertisseur selon la fonction:

$$W_{Lmaxu}^{\Sigma} = \frac{C_{tot}}{2}(NV_{smMax})^2 - W_{ru}^{\Sigma}(t_r)$$

où $C_{tot}$ est la somme des capacités des condensateurs dans le demi-bras, $V_{smMax}$ est la tension maximale tolérable d'un sous-module, N est le nombre de sous-modules dans le demi-bras et où $t_r$ est un instant déterminé pour lequel l'énergie interne dans le demi-bras atteint la limite supérieure $W_{Lmaxu}^{\Sigma}$ et cet instant est obtenu par la formule:

$$t_r = \frac{1}{\omega}\left(\cos^{-1}(-\frac{\sqrt{2}I_{diff}}{I_g}) - \theta\right) + \frac{2k\pi}{\omega}$$

En variante, le module de contrôle est configuré pour déterminer la limite supérieure $W_{Lmaxl}^{\Sigma}$ de l'énergie interne stockée dans les condensateurs des sous-modules d'un demi-bras inférieur du convertisseur. Là-encore, l'expression de ladite limite supérieure $W_{Lmaxl}^{\Sigma}$ être déterminée en utilisant la symétrie entre les demi-bras supérieur et inférieur. Dans cette expression, la valeur des contraintes est identique à la valeur des contraintes relatives au demi-bras supérieur.

Sans sortir du cadre de l'invention, la limite supérieure de l'énergie interne stockée dans les condensateurs des sous-modules d'un demi-bras inférieur ou supérieur est déterminée à l'aide d'une approche prenant en compte la configuration la plus défavorable, atteinte à l'instant $t_r$, pour laquelle l'égalité suivante est vérifiée :

$$v_{c\Sigma}(t_r) = Nv_{cMax}$$

Dans cette configuration défavorable, l'énergie interne dans un demi-bras supérieur ou inférieur atteint la limite supérieure de l'énergie interne.

De préférence, le module de contrôle comporte un module de détermination de ladite limite inférieure et de ladite limite supérieure de l'énergie interne stockée dans les condensateurs des sous-modules d'un demi-bras supérieur ou inférieur en fonction de ladite valeur de tension $v_g$ mesurée sur le réseau d'alimentation électrique alternatif, de ladite valeur de tension $V_{dc}$ mesurée sur le réseau d'alimentation électrique continu, de ladite consigne de puissance alternative active $P_{ac}^*$, de ladite consigne de puissance alternative réactive $Q_{ac}^*$ et de ladite consigne de puissance continue $P_{dc}^*$.

Grâce au module de détermination, la limite inférieure et/ou la limite supérieure de l'énergie interne sont asservies, de préférence en temps réel, en fonction de l'état des réseaux d'alimentation électrique.

Encore de préférence, le module de contrôle comporte un module de correction d'une consigne d'énergie interne en fonction de ladite limite supérieure et de ladite limite inférieure, fournies par le module de contrôle. Un intérêt est d'obtenir une consigne d'énergie interne adaptée aux conditions du réseau et qui assure un bon fonctionnement du convertisseur. Cette correction de la consigne de l'énergie interne stockée dans les condensateurs permet d'améliorer le contrôle de l'énergie interne et améliore encore la gestion de la capacité de stockage d'énergie du convertisseur.

On comprend que lorsque la consigne d'énergie interne en entrée du module de correction ne dépasse pas ladite limite inférieure ou ladite limite supérieure, ladite consigne d'énergie interne n'est pas modifiée. Le module de correction fournit alors en sortie une consigne d'énergie interne identique à celle reçue en entrée.

En revanche, lorsque la consigne d'énergie interne est inférieure à ladite limite inférieure ou supérieure à ladite limite supérieure, le module de correction corrige la consigne de manière à ce qu'elle soit supérieure à la limite inférieure ou inférieure à la limite supérieure.

Selon un aspect particulièrement avantageux de l'invention, le module de contrôle comporte un régulateur de l'énergie interne du convertisseur ayant en entrée une consigne d'énergie interne du convertisseur et délivrant une consigne de puissance pour les condensateurs dudit convertisseur. Ce régulateur de l'énergie interne permet de réguler l'énergie interne stockée dans les condensateurs d'un demi-bras supérieur ou inférieur du convertisseur, en la faisant tendre vers sa consigne.

De manière non limitative, la consigne d'énergie interne peut être fournie par un module de correction. Grâce au régulateur de l'énergie interne on peut donc asservir la tension aux bornes de chaque condensateur modélisé et ainsi contrôler efficacement l'énergie stockée dans les condensateurs.

Préférentiellement, le module de contrôle comporte un régulateur de la puissance aux points de connexion du convertisseur avec le réseau AC ayant en entrée une consigne de puissance active alternative $P_{ac}^*$ et une consigne de puissance réactive alternative $Q_{ac}^*$ et délivrant une consigne de courant alternatif $i_{gd}^*$ et une consigne de courant alternatif $i_{gq}^*$. La consigne de courant alternatif $i_{gd}^*$ est associée à la consigne puissance alternative $P_{ac}^*$ tandis que la consigne de courant alternatif $i_{gq}^*$ est associée à la consigne de puissance réactive alternative $Q_{ac}^*$. Ce régulateur met en œuvre une régulation dite lente de la puissance aux points de connexion du convertisseur avec le réseau AC.

De préférence, le module de contrôle comporte un régulateur de la puissance aux points de connexion du convertisseur avec le réseau DC ayant en entrée une consigne de puissance continue $P_{dc}^*$ et délivrant une consigne de courant différentiel $i_{diff}^*$. Ce régulateur met en œuvre une régulation dite lente de la puissance aux points de connexion du convertisseur avec le réseau DC.

Encore de préférence, le module de contrôle comporte un régulateur du courant alternatif $i_g$ du réseau d'alimentation électrique alternatif ayant en entrée une consigne de courant alternatif $i_{gd}^*$ et une consigne de courant alternatif $i_{gq}^*$ associées au courant alternatif $i_g$ et fournissant en sortie une consigne de tension interne alternative équivalente $v_v^*$. $i_g$ est le courant traversant le réseau d'alimentation électrique alternatif. La régulation du courant alternatif $i_g$ revient à réguler les transferts de puissance alternative en entrée ou en sortie suivant la configuration du convertisseur. Ce régulateur met en œuvre une régulation dite rapide du courant alternatif $i_g$.

Avantageusement, le module de contrôle comporte un régulateur du courant différentiel $i_{diff}$ ayant en entrée une consigne de courant différentiel $i_{diff}^*$ associée au courant différentiel $i_{diff}$ et fournissant en sortie une consigne de tension différentielle $v_{diff}^*$. La régulation du courant différentiel $i_{diff}$ revient à réguler les transferts de puissance continue en entrée ou en sortie suivant la configuration du convertisseur. Ce régulateur met en œuvre une régulation dite rapide du courant différentiel $i_{diff}$. $i_{diff}$ représentant le courant différentiel du réseau d'alimentation électrique continu.

L'invention porte également sur un procédé de contrôle d'un convertisseur de tension modulaire multi-niveaux, le convertisseur permettant de convertir une tension alternative en une tension continue et inversement, et comportant une partie dite continue destinée à être reliée à un réseau d'alimentation électrique continu et une partie dite alternative destinée à être reliée à un réseau d'alimentation électrique alternatif, le convertisseur comportant une pluralité de bras, chaque bras comportant un demi-bras supérieur et un demi-bras inférieur, chaque demi-bras comprenant une pluralité de sous-modules commandables individuellement par un organe de commande propre à chaque sous-module et chaque sous-module comprenant un condensateur connectable en série dans le demi-bras lorsque l'organe de commande est dans un état commandé.

De manière caractéristique, le procédé comporte une étape de régulation de l'énergie interne stockée dans les condensateurs des sous-modules d'un demi-bras supérieur ou inférieur du convertisseur dans laquelle on limite ladite énergie interne en-dessous d'une limite supérieure et/ou au-dessus d'une limite inférieure, en utilisant des paramètres mesurés sur le réseau d'alimentation électrique continu et sur le réseau d'alimentation électrique alternatif, ainsi que des consignes de puissance de fonctionnement du convertisseur.

Préférentiellement, le procédé de contrôle comporte une détermination de ladite limite inférieure et de ladite limite supérieure de l'énergie interne stockée dans les condensateurs des sous-modules d'un demi-bras supérieur ou inférieur du convertisseur en fonction desdits paramètres mesurés sur le réseau d'alimentation électrique continu et sur le réseau d'alimentation électrique alternatif, ainsi que des consignes de puissance de fonctionnement du convertisseur.

De préférence, le procédé de contrôle comporte une correction d'une consigne d'énergie interne, en fonction de ladite limite supérieure et de ladite limite inférieure.

Encore de préférence, le procédé de contrôle comporte une régulation de l'énergie interne du convertisseur en utilisant en entrée une consigne d'énergie interne du convertisseur et délivrant une consigne de puissance pour les condensateurs dudit convertisseur.

De manière avantageuse, le procédé de contrôle comporte une régulation de la puissance aux points de connexion du convertisseur avec le réseau AC en utilisant en entrée une consigne de puissance active alternative $P_{ac}^*$ et une consigne de puissance réactive alternative $Q_{ac}^*$ et délivrant une consigne de courant alternatif $i_{gd}^*$ et une consigne de courant alternatif $i_{gq}^*$ .

Avantageusement, le procédé de contrôle comporte une régulation de la puissance aux points de connexion du convertisseur avec le réseau DC en utilisant en entrée une consigne de puissance continue $P_{dc}^*$ et délivrant une consigne de courant différentiel $i_{diff}^*$ .

Préférentiellement, le procédé de contrôle comporte une régulation du courant alternatif $i_g$ en utilisant en entrée une consigne de courant alternatif $i_{gd}^*$ et une consigne de courant alternatif $i_{gq}^*$ associées au courant alternatif $i_g$ et fournissant en sortie une consigne de tension interne alternative équivalente $v_v^*$ .

De préférence, le procédé de contrôle comporte une régulation du courant différentiel $i_{diff}$ en utilisant en entrée une consigne de courant différentiel $i_{diff}^*$ associée au courant différentiel $i_{diff}$ et fournissant en sortie une consigne de tension différentielle $v_{diff}^*$ .

Sans sortir du cadre de l'invention, ce procédé de contrôle peut être mis en œuvre au moyen du convertisseur tel que défini ci-avant dans tous ses modes de réalisation, même préférentiels.

Brève description des dessins

L'invention sera mieux comprise à la lecture de la description qui suit d'un mode de réalisation de l'invention donné à titre d'exemple non limitatif, en référence aux dessins annexés, sur lesquels :

- la figure **1,** déjà décrite, illustre un convertisseur modulaire multi-niveaux à trois phases selon la technique antérieure ;
- la figure **2,** déjà décrite, illustre un sous-module d'un convertisseur modulaire multi-niveaux selon la technique antérieure ;
- la figure **3,** déjà décrite, illustre un circuit équivalent d'un demi-bras d'un convertisseur MMC selon la technique antérieure ;
- la figure **4,** déjà décrite, montre une configuration équivalente d'un convertisseur modulaire multi-niveaux selon la technique antérieure ;
- la figure **5** illustre une représentation équivalente et schématique d'un convertisseur modulaire multi-niveaux selon l'invention ;
- la figure **6** illustre un convertisseur modulaire multi-niveaux selon l'invention, comportant un module de contrôle ;
- la figure **7** illustre un module de détermination de la limite supérieure et de la limite inférieure l'énergie interne stockée dans un demi-bras du convertisseur de la figure **6** ;
- la figure **8** illustre une première simulation dans laquelle on fait varier la tension du réseau d'alimentation électrique continu ;
- La figure **9A** montre l'évolution, pour un premier système, de l'énergie interne au voisinage de la limite inférieure d'un convertisseur selon l'invention, comportant un module de contrôle, en réponse à la variation de tension de la figure **8** ;
- la figure **9B** montre l'évolution de l'indice de modulation du convertisseur selon l'invention du premier système de la figure **9A;**
- la figure **10A** montre l'évolution, pour un second système, de l'énergie interne au voisinage de la limite inférieure d'un convertisseur MMC selon l'art antérieur, ne comportant pas de module de contrôle, en réponse à la variation de tension de la figure **8** ;
- la figure **10B** montre l'évolution de l'indice de modulation du convertisseur de l'art antérieur du second système de la figure **10A;**

- la figure **11** illustre une seconde simulation dans laquelle on fait varier la puissance alternative active ;
- La figure **12A** montre l'évolution, pour un premier système, de l'énergie interne au voisinage de la limite supérieure d'un convertisseur selon l'invention, comportant un module de contrôle, en réponse à la variation de puissance de la figure **11** ;
- la figure **12B** montre l'évolution de la tension d'un condensateur d'un sous-module du convertisseur, selon l'invention, du premier système de la figure **12A** ;
- la figure **13A** montre, pour un second système, l'évolution de l'énergie interne au voisinage de la limite supérieure, d'un convertisseur MMC selon l'art antérieur, ne comportant pas de module de contrôle, en réponse à la variation de puissance de la figure **11** ; et
- la figure **13B** montre l'évolution de la tension d'un condensateur d'un sous-module du convertisseur, selon l'art antérieur, du second système de la figure **13A.**

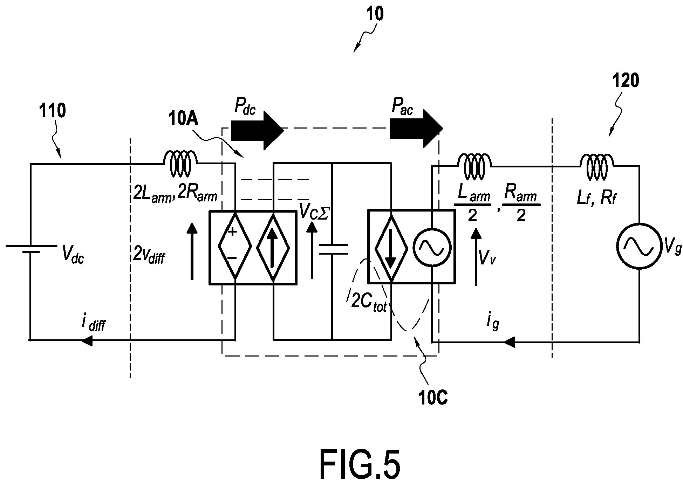

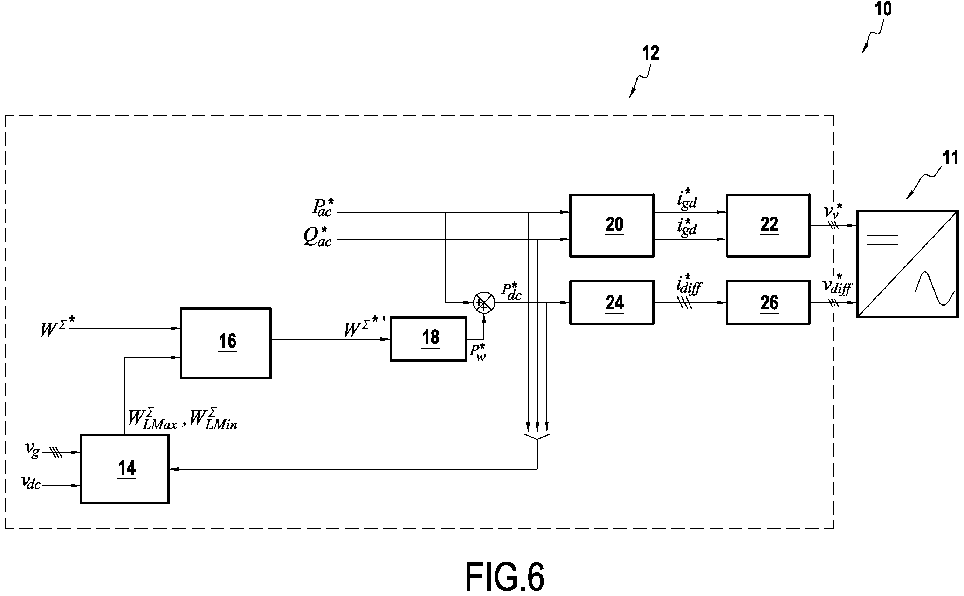

<u>Description détaillée de l'invention</u> Un mode de réalisation de l'invention, représenté en figure **6,** porte sur un convertisseur modulaire multi-niveaux **10** comportant un module de contrôle **12.** Un circuit du comportement équivalent du convertisseur **10** selon l'invention, dans une modélisation monophasée, est illustré en figure **5.** Sur cette figure **5,** le module de contrôle n'est pas représenté. La modélisation monophasée permet en outre de simplifier les notations et schémas. Sur cette figure, de manière non limitative, on a représenté un convertisseur MMC **10** d'énergie continue en énergie alternative.

Dans cet exemple, on remarque que ce convertisseur **10** comporte une partie continue **10A,** reliée au réseau d'alimentation électrique continu **110,** en partie gauche du schéma. En partie droite du schéma, on voit que le convertisseur **10** comporte une partie alternative **10C** reliée au réseau d'alimentation électrique alternatif **120.** Sur la figure **5,** $L_{arm}$ et $R_{arm}$ désignent respectivement l'inductance et la résistance dans un demi-bras, $L_f$ et $R_f$ désignent respectivement l'inductance et la résistance dans une ligne de phase. $i_{diff}$ désigne le courant différentiel traversant le réseau d'alimentation électrique continu et $v_{diff}$ désigne la tension différentielle aux bornes de la partie continue du convertisseur. $i_g$ désigne le courant alternatif traversant le réseau d'alimentation électrique alternatif et $V_v$ désigne la tension interne alternative équivalente, aux bornes de la partie alternative du convertisseur. $v_g$ désigne la tension du réseau d'alimentation électrique alternatif et $V_{dc}$ désigne la tension du réseau d'alimentation électrique continu. En outre, on remarque que la puissance échangée entre le réseau d'alimentation électrique continu **110** et le convertisseur **10** est notée $P_{dc}$ et que la puissance échangée entre le convertisseur **10** et le réseau d'alimentation électrique alternatif **120** est notée $P_{ac}$.

La figure **6** illustre un convertisseur modulaire multi-niveaux **10** selon l'invention, comportant une unité de conversion **11** et un module de contrôle **12.** Ce module de contrôle **12** consiste en une boucle de commande et est configuré pour réguler l'énergie interne stockée dans les condensateurs des sous-modules $SM_{xij}$ d'un demi-bras supérieur ou inférieur du convertisseur. Dans l'exemple non limitatif de la figure **6,** le module de contrôle **12** est en outre apte à limiter l'énergie interne, stockée dans les condensateurs d'un demi-bras supérieur ou inférieur du convertisseur, en-dessous d'une limite supérieure $W_{Lmax}^{\Sigma}$ et au-dessus d'une limite inférieure $W_{Lmin}^{\Sigma}$. Le module de contrôle permet donc de maintenir l'énergie interne entre ladite limite supérieure $W_{Lmax}^{\Sigma}$ et ladite limite inférieure $W_{Lmin}^{\Sigma}$, ce qui assure un bon fonctionnement dudit convertisseur **10,** sans risque de l'endommager.

Comme on le constate sur l'exemple de la figure **6,** le module de contrôle **12** comporte en outre un module de détermination **14** de ladite limite inférieure $W_{Lmin}^{\Sigma}$ et de ladite limite supérieure $W_{Lmax}^{\Sigma}$ de l'énergie interne du convertisseur. Ce module de détermination **14** reçoit en entrées une valeur de tension $v_g$ mesurée sur le réseau d'alimentation électrique alternatif **120,** une valeur de tension $V_{dc}$ mesurée sur le réseau d'alimentation électrique continu **110,** une consigne de puissance alternative active $P_{ac}^{*}$, une consigne de puissance alternative réactive $Q_{ac}^{*}$ et une consigne de puissance continue $P_{dc}^{*}$. On comprend que la limite inférieure $W_{Lmin}^{\Sigma}$ et la limite supérieure $W_{Lmax}^{\Sigma}$ ne sont pas fixes et évoluent avec l'état des réseaux d'alimentation électrique.

De préférence, mais de manière non limitative les valeurs de tensions $v_g$ et $V_{dc}$ sont mesurées en temps réel, de sorte que les valeurs de $W_{Lmax}^{\Sigma}$ et $W_{Lmin}^{\Sigma}$ sont asservies en temps réel et adaptées à l'état des réseaux d'alimentation électrique à chaque instant. Le fonctionnement du module de détermination **14** sera explicité plus en détail par la suite.

Sur la figure **6,** on remarque également que le module de contrôle **12** comprend un module de correction **16.** Dans cet exemple non limitatif, ce module de correction **16** utilise en entrée une consigne d'énergie interne $W^{\Sigma *}$ stockée

dans les condensateurs d'un demi-bras du convertisseur **10**, ainsi que la limite inférieure $W^{\Sigma}_{Lmin}$ et la limite supérieure $W^{\Sigma}_{Lmax}$ de l'énergie interne fournies par le module de détermination **14**. Le module de correction **16** fournit en sortie une consigne d'énergie interne corrigée $W^{\Sigma*}$.

Si la consigne d'énergie interne $W^{\Sigma*}$ en entrée du module de correction **16** ne dépasse pas ladite limite inférieure $W^{\Sigma}_{Lmin}$ ou ladite limite supérieure $W^{\Sigma}_{Lmax}$, ladite consigne d'énergie interne $W^{\Sigma*}$ n'est pas modifiée. Le module de correction **16** fournit alors en sortie une consigne d'énergie interne $W^{\Sigma*\prime}$ identique la consigne d'énergie interne $W^{\Sigma*}$ reçue en entrée. En revanche, lorsque la consigne d'énergie interne $W^{\Sigma*}$ est inférieure à ladite limite inférieure $W^{\Sigma}_{Lmin}$ ou supérieure à ladite limite supérieure $W^{\Sigma}_{Lmax}$, le module de correction **16** corrige la consigne d'énergie interne $W^{\Sigma*}$ de manière à fournir en sortie une consigne d'énergie interne corrigée $W^{\Sigma*\prime}$ supérieure à la limite inférieure ou inférieure à la limite supérieure.

Le module de contrôle **12** de la figure **6** comporte également un régulateur **18** de l'énergie interne du convertisseur **10**. Ce régulateur **18** de l'énergie interne du convertisseur délivre une consigne de puissance $P^*_w$ pour les condensateurs du convertisseur **10**, déterminée à partir de la consigne d'énergie interne corrigée $W^{\Sigma*\prime}$ fournie par le module de correction **16**. L'énergie interne du convertisseur, stockée dans les condensateurs, est donc régulée, de préférence en temps réel, au moyen d'une consigne d'énergie interne corrigée $W^{\Sigma*\prime}$, de préférence également en temps réel.

On remarque également que, dans cet exemple, le module de contrôle **10** comporte un régulateur **20** de la puissance aux points de connexion du convertisseur avec le réseau AC. Ce régulateur **20** de la puissance aux points de connexion du convertisseur avec le réseau AC reçoit en entrée une consigne de puissance active alternative $P^*_{ac}$ et une consigne de puissance réactive alternative $Q^*_{ac}$ et délivre une consigne de courant alternatif $i^*_{gd}$ et une consigne de courant alternatif $i^*_{gq}$.

De manière non limitative, le module de contrôle **10** comporte un régulateur **22** du courant alternatif $i_g$ du réseau d'alimentation électrique alternatif **120** recevant en entrée une consigne de courant alternatif $i^*_{gd}$ et une consigne de courant alternatif $i^*_{gq}$ fournies par le régulateur **20** de la puissance aux points de connexion du convertisseur avec le réseau AC. Ce régulateur **22** du courant alternatif $i_g$ fournit en sortie, à destination du convertisseur MMC **10**, une consigne de tension interne alternative équivalente $v^*_v$.

Par ailleurs, dans l'exemple de la figure **6**, la consigne de puissance alternative active $P^*_{ac}$ utilisée en entrée du module de détermination **14**, est également comparée et ajoutée à la consigne de puissance $P^*_w$ sortant du régulateur **18** de l'énergie interne du convertisseur **10**. Cette comparaison a pour résultat une consigne de puissance continue $P^*_{dc}$ fournie en entrée d'un régulateur **24** de la puissance aux points de connexion du convertisseur avec le réseau DC. Ce régulateur **24** de la puissance aux points de connexion du convertisseur avec le réseau DC délivre une consigne de courant différentiel $i^*_{diff}$, $i_{diff}$ représentant le courant différentiel du réseau d'alimentation électrique continu.

Toujours de manière non limitative, le module de contrôle **10** comporte un régulateur **26** du courant différentiel $i_{diff}$ ayant en entrée une consigne de courant différentiel $i^*_{diff}$, associée au courant différentiel $i_{diff}$, fournie par le régulateur **24** de la puissance aux points de connexion du convertisseur **10** avec le réseau DC **110**. Le régulateur **26** du courant différentiel $i_{diff}$ fournit en sortie, à destination du convertisseur MMC **10**, une consigne de tension différentielle $v^*_{diff}$.

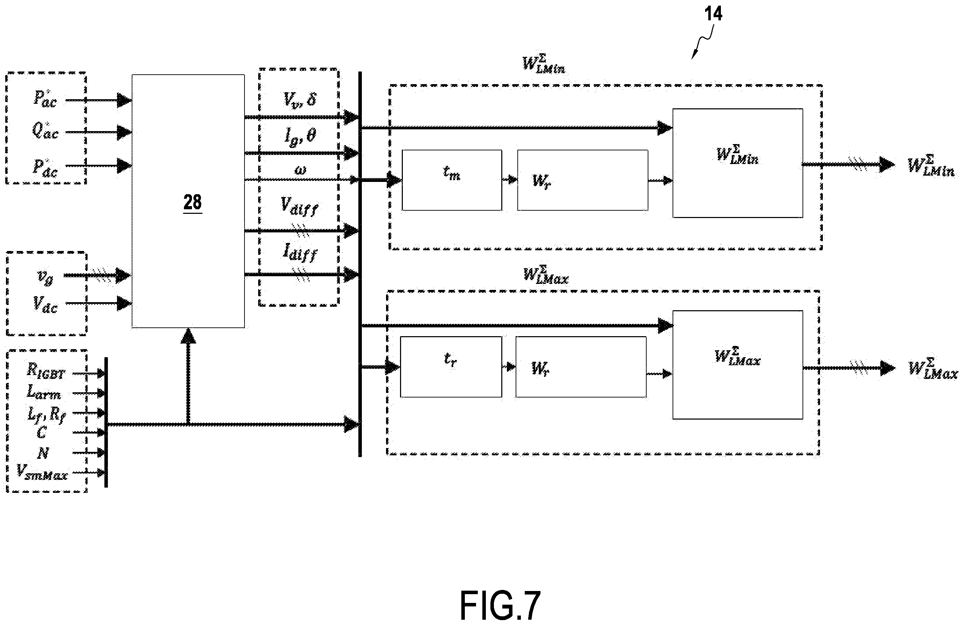

La figure **7** illustre le fonctionnement du module de détermination **14** de la limite inférieure $W^{\Sigma}_{Lmin}$ et de la limite supérieure $W^{\Sigma}_{Lmax}$ de l'énergie interne du convertisseur **10**. De manière non limitative, ce module de détermination **14** comporte une unité de calcul **28** permettant de calculer des variables intermédiaires à partir des variables d'entrée que sont la valeur de tension $\upsilon_g$ mesurée sur le réseau d'alimentation électrique alternatif, la valeur de tension $V_{dc}$ mesurée sur le réseau d'alimentation électrique continu, la consigne de puissance alternative active $P_{ac}^*$, la consigne de puissance alternative réactive $Q_{ac}^*$ et la consigne de puissance continue $P_{dc}^*$, ainsi qu'à partir d'un ensemble de paramètres d'état, connus et propres au convertisseur **10**.

Dans cet exemple, ces paramètres d'état comprennent l'inductance $L_{arm}$ dans un demi-bras, l'inductance $L_f$ et la résistance $R_f$ dans une ligne de phase, la capacité C des condensateurs dans un demi-bras, chaque condensateur ayant de préférence une capacité identique, la tension maximale $V_{smMax}$ tolérable d'un sous-module, le nombre N de sous-modules dans un demi-bras et la résistance $R_{IGBT}$ des transistors bipolaires à grille isolée composant les éléments de commutation **T1** et **T2** de chaque sous-module.

De manière non limitative, les variables intermédiaires comportent notamment une variable de courant différentiel équivalente $I_{diff}$, représentant le courant circulant vers le réseau d'alimentation électrique continu dans une modélisation monophasée du convertisseur en régime permanent, une variable de tension différentielle équivalente $V_{diff}$, représentant la tension, en régime permanent, aux bornes de la partie continue du convertisseur dans ladite modélisation, une variable de tension interne alternative équivalente $V_\nu$, en régime permanent, dans ladite modélisation monophasée du convertisseur et une variable de courant intermédiaire équivalente $I_g$, représentant le courant circulant vers le réseau d'alimentation électrique alternatif dans ladite modélisation monophasée du convertisseur, également en régime permanent.

Les variables intermédiaires comportent également la pulsation $\omega$, une variable de déphasage $\theta$ entre le vecteur la tension du réseau d'alimentation électrique alternatif et le vecteur du courant circulant vers le réseau d'alimentation électrique alternatif. Les variable intermédiaires comporte en outre une variable angulaire intermédiaire $\delta$ représentant le déphasage entre le vecteur de la tension du réseau d'alimentation électrique alternatif et le vecteur de la tension interne alternative équivalente $V_\nu$.

A partir de ces variables intermédiaires, le module de détermination **14** est apte à déterminer l'instant $t_m$ pour lequel la configuration est la plus défavorable pour le convertisseur **10** et pour lequel l'énergie interne dans un demi-bras atteint la limite inférieure de l'énergie interne $W_{Lmin}^{\Sigma}$. A cet instant $t_m$ la tension insérée $v_m$ dans le demi-bras est égale à la somme des tensions $v_{c\Sigma}$ des sous-modules dans ce demi-bras. Le module de détermination **14** est également apte à déterminer l'instant $t_r$ pour lequel la configuration est la plus défavorable pour le convertisseur et pour lequel l'énergie interne dans un demi-bras atteint la limite supérieure de l'énergie interne $W_{Lmax}^{\Sigma}$.

Le module de détermination **14** est également apte à déterminer la composante oscillatoire de l'énergie interne $W_{ru}^{\Sigma}(t)$ stockée dans les condensateurs des sous-modules d'un demi-bras supérieur du convertisseur. Sans sortir du cadre de l'invention, Le module de détermination **14** est également apte à déterminer la composante oscillatoire de l'énergie interne $W_{rl}^{\Sigma}(t)$ stockée dans les condensateurs des sous-modules d'un demi-bras inférieur du convertisseur.

Partant de la composante oscillatoire de l'énergie interne $W_{ru}^{\Sigma}(t)$, des instant $t_r$ et $t_m$ et des variables intermédiaires déterminée, le module de détermination **14** est apte à déterminer la limite inférieure $W_{Lmin}^{\Sigma}$ et la limite supérieure $W_{Lmax}^{\Sigma}$ de l'énergie interne.

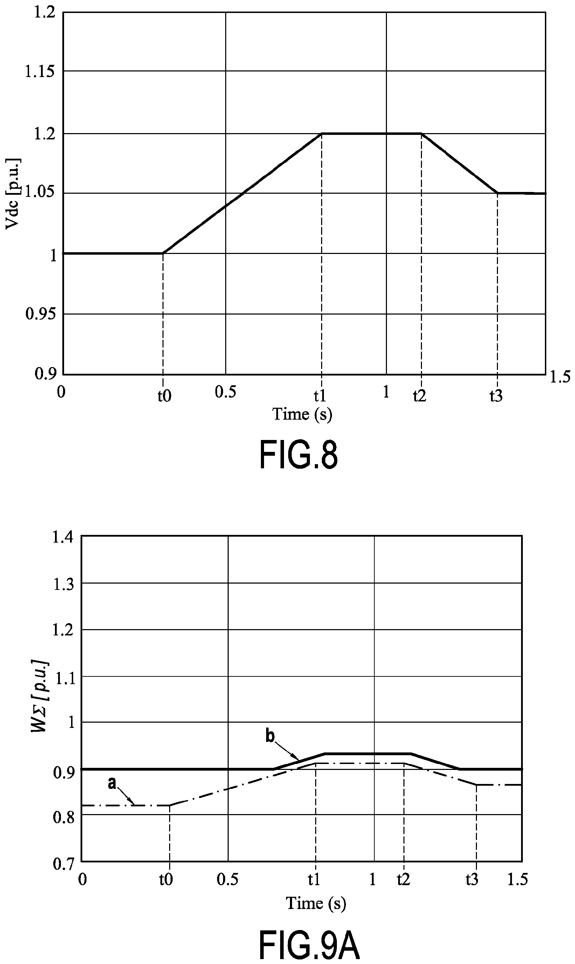

Les figures **8** à **13B** illustrent deux simulations de contrôle de l'énergie interne stockée dans les condensateurs d'un demi-bras d'un convertisseur. Sur ces figures, pour plus de clarté, les grandeurs de puissance, d'énergie et de tension, hormis la tension d'un condensateur d'un sous-module, sont données en unité réduite [p. u.] tandis que le temps est exprimé en secondes.

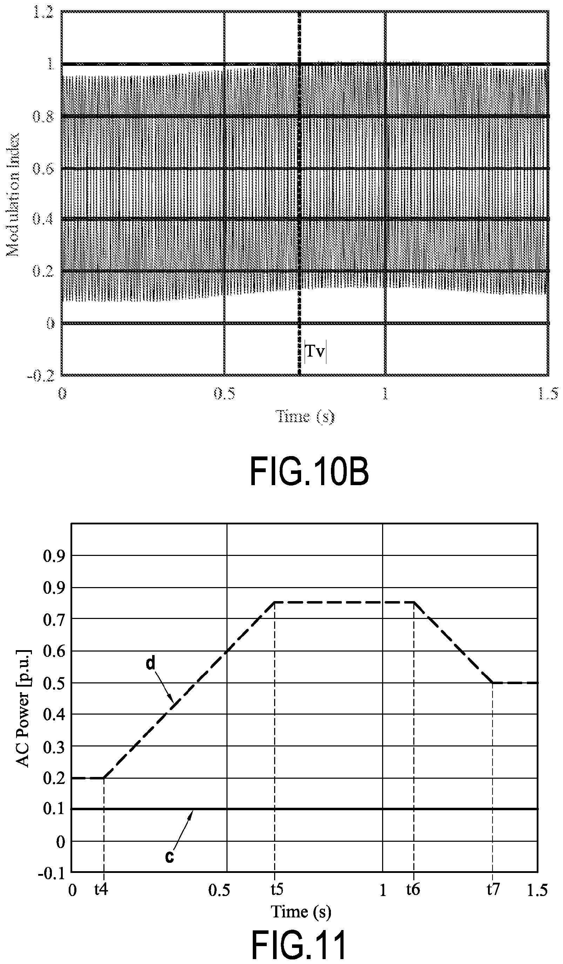

En particulier, les figures **8** à **10B** illustrent une première simulation mettant en avant le comportement de deux systèmes lorsque le niveau de l'énergie interne est au voisinage de la limite inférieure $W_{Lmin}^{\Sigma}$. Les figures **11** à **13B** illustrent une seconde simulation mettant en avant le comportement de deux systèmes lorsque le niveau de l'énergie interne est au voisinage de la limite supérieure $W_{Lmax}^{\Sigma}$.

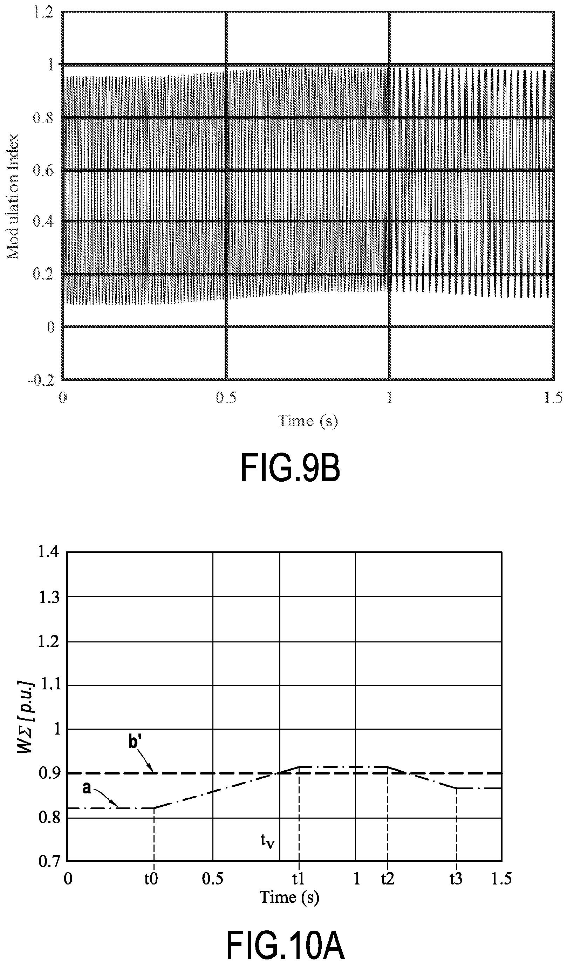

Dans la première simulation, illustrée en figures **8** à **10B,** on compare notamment le comportement de deux systèmes. Le premier système, dont le comportement est illustré par les courbes des figures **9A** et **9B,** consiste en un convertisseur modulaire multi-niveaux selon l'invention, comportant un module de contrôle de l'énergie interne. Le second système, dont le comportement est illustré par les courbes des figures **10A** et **10B,** consiste en un convertisseur modulaire multi-niveaux de l'art antérieur, ne comportant pas de module de contrôle de l'énergie interne. L'énergie interne du second système n'est donc pas régulée.

La figure **8** représente une variation, imposée pour les besoins de la simulation, de la tension $V_{dc}$ du réseau d'alimentation électrique continu en fonction du temps. La tension $V_{dc}$ est d'abord soumise à une augmentation, à partir d'un instant $t_0$ jusqu'à un instant $t_1$, puis $V_{dc}$ diminue depuis un instant $t_2$ jusqu'en un instant $t_3$.

La figure **9A,** montre l'évolution de la moyenne de l'énergie interne stockée dans les condensateurs d'un demi-bras du convertisseur **10** selon l'invention, pour le premier système, en réponse à la variation de tension de la figure **8.**

Sur cette figure, la courbe *a* représente l'évolution de la limite inférieure $W_{Lmin}^{\Sigma}$ de l'énergie interne en fonction du temps. Cette limite est déterminée, d'après ce qui précède, par le module de contrôle **12,** et plus particulièrement par le module détermination **14.** On constate que cette limite inférieure $W_{Lmin}^{\Sigma}$ suit l'évolution de la tension $V_{dc}$ du réseau d'alimentation électrique continu. $V_{dc}$ est un paramètre influant beaucoup sur limite inférieure $W_{Lmin}^{\Sigma}$ de sorte qu'en faisant varier ce paramètre on peut suivre aisément l'évolution de l'énergie interne stockée dans les condensateurs d'un demi-bras du convertisseur **10.** La limite inférieure $W_{Lmin}^{\Sigma}$ augmente donc à partir de l'instant $t_0$ jusqu'à l'instant $t_1$, puis elle diminue depuis l'instant $t_2$ jusqu'à l'instant $t_3$.

Dans l'exemple de la figure **9A,** la moyenne de l'énergie interne du convertisseur, représentée par la courbe *b*, est maintenue à une valeur de référence initiale. Lorsque ce niveau d'énergie interne s'approche de la limite inférieure $W_{Lmin}^{\Sigma}$, le module de contrôle régule l'énergie interne de sorte à maintenir ce niveau au-dessus de ladite limite inférieure.

La figure **9B** montre la variation de l'indice de modulation m pour ce premier système, en réponse à la variation de la tension $V_{dc}$ du réseau d'alimentation électrique continu de la figure **8.** Il est connu que la tension insérée $v_m$ dans un demi-bras est proportionnelle à la tension $V_{dc}$ du réseau d'alimentation électrique continu. Aussi, une augmentation de la tension $V_{dc}$ implique une augmentation de la tension insérée $v_m$ qui conduit à une augmentation de l'indice de modulation m. Dans l'exemple de la figure **9B,** l'énergie interne du convertisseur étant régulée grâce au module de contrôle, l'indice de modulation m est maintenu inférieur à 1 de sorte que l'inéquation suivante est vérifiée :

$$\frac{v_m(t)}{v_{c\Sigma}(t)} \leq 1$$

Le bon fonctionnement du convertisseur est donc assuré.

Sur la figure **10A,** on peut voir l'évolution, pour le second système, de la moyenne de l'énergie interne stockée dans les condensateurs d'un demi-bras d'un convertisseur selon l'art antérieur, en réponse à la variation de tension de la figure **8.**

La courbe *a* représente l'évolution de la limite inférieure $W_{Lmin}^{\Sigma}$ de l'énergie interne, déterminée grâce au module de contrôle du premier système. On constate que l'énergie interne du convertisseur, dont la moyenne est représentée par la courbe b', n'est pas régulée, de sorte que le niveau de cette énergie interne reste constant et passe en-dessous de la limite inférieure $W_{Lmin}^{\Sigma}$ à l'instant $t_v$.

La figure **10B** montre la variation de l'indice de modulation m pour ce second système. Le convertisseur de l'art antérieur ne comportant pas de module de contrôle et l'énergie interne du convertisseur n'étant pas régulée, l'indice de modulation m n'est pas régulé et dépasse 1 de sorte que l'inéquation suivante n'est plus vérifiée, à partir de l'instant $t_v$ :

$$\frac{v_m(t)}{v_{c\Sigma}(t)} \leq 1$$

Le bon fonctionnement du convertisseur n'est alors plus assuré et le convertisseur risque d'être endommagé.

On comprend donc qu'en plus de déterminer une limite inférieure $W_{Lmin}^{\Sigma}$ adaptée à l'état du réseau, le module de contrôle **12** du convertisseur **10** selon l'invention, utilisé dans l'exemple de simulation non limitatif des figures **9A** et **9B,** permet de maintenir l'énergie interne au-dessus de ladite limite inférieure $W_{Lmin}^{\Sigma}$. Ceci maintient l'indice de modulation inférieur à 1 et assure le bon fonctionnement du convertisseur.

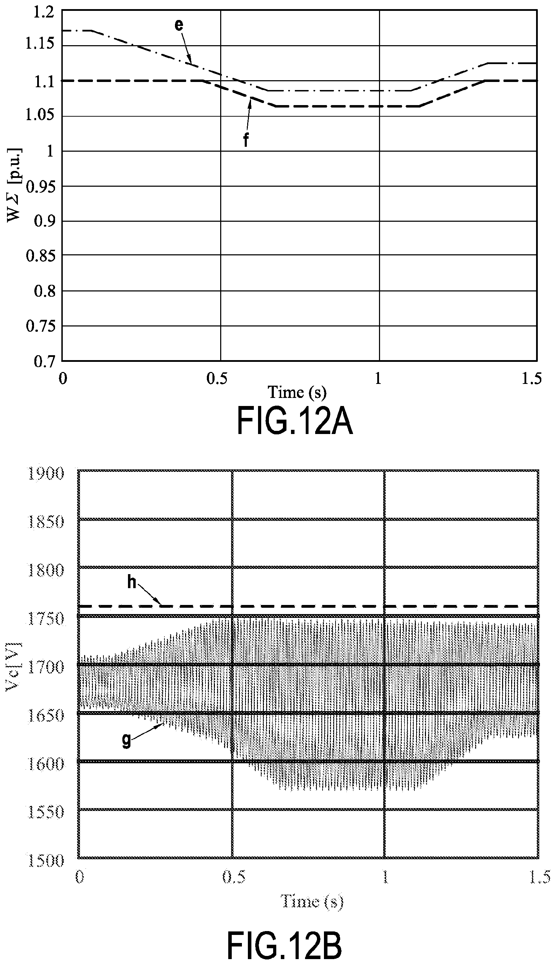

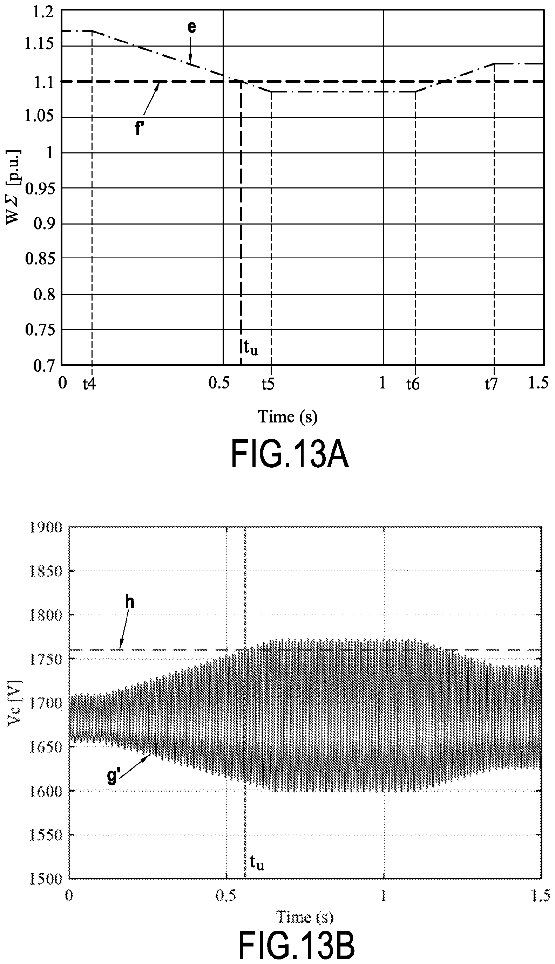

Les résultats de la seconde simulation du comportement du convertisseur, lorsque le niveau de l'énergie interne est au voisinage de la limite supérieure $W_{Lmax}^{\Sigma}$, vont être illustrés à la lumière des figures **11** à **13B.** Dans cette seconde simulation, on compare également le comportement de deux systèmes. Là encore, le premier système, dont le comportement est illustré par les courbes des figures **12A** et **12B,** consiste en un convertisseur modulaire multi-niveaux selon l'invention, comportant un module de contrôle de l'énergie interne. Le second système, dont le comportement est illustré par les courbes des figures **13A** et **13B,** consiste en un convertisseur modulaire multi-niveaux de l'art antérieur, ne comportant pas de module de contrôle de l'énergie interne. L'énergie interne du second système n'est donc pas régulée.

La courbe c de la figure **11** représente la puissance alternative réactive $Q_{ac}$ maintenue constante, tandis que la courbe d représente la puissance alternative active $P_{ac}$ en fonction du temps. Ces puissances sont des puissances transférées entre le convertisseur et le réseau d'alimentation électrique alternatif. Pour les besoins de la simulation, la puissance alternative active $P_{ac}$ est d'abord soumise à une augmentation, à partir d'un instant $t_4$ jusqu'à un instant $t_5$, puis $P_{ac}$ diminue depuis un instant $t_6$ jusqu'en un instant $t_7$.

La figure **12A,** montre l'évolution de l'énergie interne stockée dans les condensateurs d'un demi-bras du convertisseur selon l'invention, pour le premier système, en réponse à la variation de puissance de la figure **11.** Sur cette figure, la courbe e représente l'évolution de la limite supérieure $W_{Lmax}^{\Sigma}$ de l'énergie interne. Cette limite est déterminée, d'après ce qui précède, en temps réel par le module de contrôle. On constate que cette limite supérieure évolue en opposition de la puissance alternative active $P_{ac}$. $P_{ac}$ est un paramètre influant beaucoup sur limite supérieure $W_{Lmax}^{\Sigma}$ de sorte qu'en faisant varier ce paramètre on peut suivre aisément l'évolution de l'énergie interne stockée dans les condensateurs d'un demi-bras du convertisseur **10.** La limite supérieure $W_{Lmax}^{\Sigma}$ diminue donc à partir de l'instant $t_4$ jusqu'à l'instant $t_5$, puis elle augmente depuis l'instant $t_6$ jusqu'à l'instant $t_7$.

Dans l'exemple de la figure **12A,** la moyenne de l'énergie interne du convertisseur du premier système, représentée par la courbe f, est maintenue à une valeur de référence initiale. Lorsque le niveau de l'énergie interne s'approche de la limite supérieure $W_{Lmax}^{\Sigma}$, le module de contrôle régule ladite énergie interne de sorte à maintenir le niveau de l'énergie interne en-dessous de ladite limite supérieure.

La courbe g de la figure **12B** montre l'évolution de la tension $v_c$ d'un condensateur d'un sous-module du premier système en fonction du temps, en réponse à la variation de puissance de la figure **11.** L'augmentation de la puissance active $P_{ac}$ et donc des échanges de puissance entre le convertisseur et le réseau d'alimentation électrique alternatif se traduit par une augmentation, à l'instant $t_4$, de l'amplitude des oscillations de la tension $v_c$ du condensateur.

On rappelle que pour ne pas endommager le sous-module et pour garantir un bon fonctionnement du convertisseur, la tension $v_c$ du condensateur doit être inférieure à une tension maximale $v_{cMax}$ correspondant à la limite de tension des éléments de commutation dudit sous-module. Dans l'exemple de la figure **12B,** l'énergie interne du convertisseur du premier système étant régulée grâce au module de contrôle, la tension $v_c$ du condensateur est régulée et écrêtée de sorte que la tension $v_c$, représentée par la courbe g, reste toujours inférieure à la limite de tension des éléments de commutation $v_{cMax}$ représentée par la courbe h.

Le bon fonctionnement du convertisseur est donc assuré et le sous-module ne risque pas d'être endommagé.

La figure **13A,** montre l'évolution, en réponse à la variation de puissance de la figure **11,** de l'énergie interne stockée dans les condensateurs d'un demi-bras du convertisseur du second système, ce convertisseur ne comportant pas de module de contrôle. La courbe e représente l'évolution de la limite supérieure $W_{Lmax}^{\Sigma}$ de l'énergie interne, déterminée grâce au module de contrôle du premier système.

On constate sur cette figure **13A** que le niveau de l'énergie interne du convertisseur, représenté par la courbe f n'est pas régulé, de sorte que ce niveau d'énergie interne reste constant et passe au-dessus de la limite supérieure $W_{Lmax}^{\Sigma}$ à l'instant $t_u$.

La courbe g' de la figure **13B** montre l'évolution de la tension $v_c$ d'un condensateur d'un sous-module du second système en fonction du temps, en réponse à la variation de puissance de la figure **11.** Dans cet exemple, le convertisseur du second système ne comportant pas de module de contrôle de l'énergie interne, l'énergie interne du convertisseur du second système n'est pas régulée. Aussi, la tension $v_c$ du condensateur n'est pas régulée de sorte que la tension

$v_c$ devient supérieure à la limite de tension des éléments de commutation $v_{cMax}$, représentée par la courbe *h,* à partir de l'instant $t_u$.

Le sous-module risque d'être endommagé et le bon fonctionnement du convertisseur n'est donc plus assuré.

On comprend donc qu'en plus de déterminer une limite supérieure $W_{Lmax}^{\Sigma}$ de l'énergie interne adaptée à l'état du réseau, le module de contrôle **12** du convertisseur **10** selon l'invention, utilisé dans l'exemple de simulation non limitatif des figures **12A** et **12B,** permet de maintenir l'énergie interne en-dessous de ladite limite supérieure $W_{Lmax}^{\Sigma}$. Ceci maintient la tension $v_c$ inférieure à la limite de tension des éléments de commutation $v_{cMax}$.

## Revendications

1. Convertisseur de tension modulaire multi-niveaux (10) permettant de convertir une tension alternative en une tension continue et inversement, comportant une partie dite continue (10A) destinée à être reliée à un réseau d'alimentation électrique continu (110) et une partie dite alternative (10C) destinée à être reliée à un réseau d'alimentation électrique alternatif (120), le convertisseur comportant une pluralité de bras, chaque bras comportant un demi-bras supérieur et un demi-bras inférieur, chaque demi-bras comprenant une pluralité de sous-modules ($SM_{xij}$) commandables individuellement par un organe de commande propre à chaque sous-module et chaque sous-module comprenant un condensateur ($C_{SM}$) connectable en série dans le demi-bras lorsque l'organe de commande du sous-module est dans un état commandé, **caractérisé en ce qu'**il comporte un module de contrôle (12) configuré pour réguler l'énergie interne stockée dans les condensateurs des sous-modules d'un demi-bras supérieur ou inférieur du convertisseur, le module de contrôle étant apte à limiter ladite énergie interne en-dessous d'une limite supérieure et/ou au-dessus d'une limite inférieure, en utilisant des paramètres mesurés en temps réel sur le réseau d'alimentation électrique continu et sur le réseau d'alimentation électrique alternatif ainsi que des consignes de puissance de fonctionnement du convertisseur, le module de contrôle étant configuré pour déterminer ladite limite supérieure et/ou ladite limite inférieure en utilisant des paramètres mesurés sur le réseau d'alimentation électrique continu et sur le réseau d'alimentation électrique alternatif, de façon à ce qu'elles évoluent avec l'état desdits réseaux d'alimentation électrique continu et alternatif, la limite inférieure et/ou la limite supérieure étant asservie(s) en temps réel.

2. Convertisseur selon la revendication **1,** dans lequel lesdits paramètres mesurés sur le réseau d'alimentation électrique continu et sur le réseau d'alimentation électrique alternatif comprennent une valeur de tension $v_g$ mesurée sur le réseau d'alimentation électrique alternatif et une valeur de tension $V_{dc}$ mesurée sur le réseau d'alimentation électrique continu.

3. Convertisseur selon l'une quelconque des revendications **1** ou **2,** dans lequel les consignes de puissance de fonctionnement du convertisseur comprennent une consigne de puissance alternative active $P_{ac}^{*}$, une consigne de puissance alternative réactive $Q_{ac}^{*}$ et une consigne de puissance continue $P_{dc}^{*}$.

4. Convertisseur selon les revendications **2** et **3,** dans lequel le module de contrôle (12) est configuré pour calculer des variables intermédiaires en fonction desdits paramètres mesurés sur le réseau d'alimentation électrique continu et sur le réseau d'alimentation électrique alternatif ainsi qu'en fonction desdites consignes de puissance de fonctionnement du convertisseur.

5. Convertisseur selon la revendication **4,** dans lequel les variables intermédiaires comportent une variable de courant différentiel équivalente $Id_{iff}$, représentant la contribution par une phase, dans un système triphasé équilibré, au courant du réseau d'alimentation électrique continu en régime permanent, déterminée au moyen de la fonction :

$$I_{diff} = \frac{P_{dc}}{3V_{dc}}$$

6. Convertisseur selon la revendication **5,** dans lequel les variables intermédiaires comportent une variable de tension différentielle équivalente $V_{diff}$, représentant la tension aux bornes de la partie continue du convertisseur en régime permanent, déterminée au moyen de la fonction :

$$V_{diff} = \frac{V_{dc}}{2} - I_{diff}R_{arm}$$

où $R_{arm}$ est la résistance dans un demi-bras du convertisseur.

7. Convertisseur selon l'une quelconque des revendications **4** à **6,** dans lequel les variables intermédiaires comportent une variable de courant intermédiaire équivalente $I_g$, représentant le courant circulant vers le réseau d'alimentation électrique alternatif en régime permanent, déterminée au moyen de la fonction :

$$I_g = \frac{\sqrt{P_{ac}^2 + Q_{ac}^2}}{3V_g}$$

où $V_g$ représente la tension du réseau d'alimentation électrique alternatif en régime permanent.

8. Convertisseur selon l'une quelconque des revendications **4** à **7,** dans lequel les variables intermédiaires comportent une variable de déphasage $\theta$ entre le vecteur de la tension du réseau d'alimentation électrique alternatif et le vecteur du courant circulant vers le réseau d'alimentation électrique alternatif.

9. Convertisseur selon l'une quelconque des revendications **4** à **8,** dans lequel les variables intermédiaires comportent une variable angulaire intermédiaire $\delta$, représentant le déphasage entre le vecteur de la tension du réseau d'alimentation électrique alternatif en régime permanent et le vecteur d'une tension interne alternative équivalente synthétisée par le convertisseur en régime permanent, $\delta$ étant déterminée au moyen de la fonction :

$$\delta = \tan^{-1} \frac{X_{eq}P_{ac} - R_{eq}Q_{ac}}{R_{eq}P_{ac} + X_{eq}Q_{ac} + 3V_g^2}$$

où $V_g$ est la tension du réseau d'alimentation électrique alternatif en régime permanent, $R_{eq}$ est la résistance équivalente dans un demi-bras et $X_{eq}$ est la réactance équivalente dans un demi-bras.

10. Convertisseur selon l'une quelconque des revendications **4** à **9,** dans lequel les variables intermédiaires comportent une variable de tension interne alternative équivalente $V_v$, synthétisée par le convertisseur en régime permanent, au moyen de la fonction :

$$V_v = \sqrt{(\frac{R_{eq}P_{ac} + X_{eq}Q_{ac}}{3V_g} + V_g)^2 + (\frac{X_{eq}P_{ac} - R_{eq}Q_{ac}}{3V_g})^2}$$

où $V_g$ représente la tension du réseau d'alimentation électrique alternatif en régime permanent, $R_{eq}$ est la résistance équivalente dans un demi-bras et $X_{eq}$ est la réactance équivalente dans un demi-bras.

11. Convertisseur selon les revendications **5** à **10,** dans lequel le module de contrôle est configuré pour déterminer la composante oscillatoire de l'énergie interne $W_{ru}^{\Sigma}(t)$ stockée dans les condensateurs d'un demi-bras supérieur du convertisseur au moyen de la fonction :

$$W_{ru}^{\Sigma}(t) = -\frac{\sqrt{2}I_{diff}V_v}{\omega}\sin(\omega t + \delta) + \frac{\sqrt{2}I_g V_{diff}}{2\omega}\sin(\omega t + \theta)$$
$$-\frac{I_g V_v}{4\omega}\sin(2\omega t + \delta + \theta)$$

où $\omega$ est la pulsation.

**12.** Convertisseur selon la revendication **11,** dans lequel le module de contrôle est configuré pour déterminer la limite inférieure $W_{Lminu}^{\Sigma}$ de l'énergie interne stockée dans les condensateurs des sous-modules d'un demi-bras supérieur du convertisseur, au moyen de la fonction:

$$W_{Lminu}^{\Sigma} = \frac{C_{tot}}{2}\left(V_{diff} - \sqrt{2}V_v\cos(\omega t_m + \delta)\right)^2 - W_{ru}^{\Sigma}(t_m)$$

où $C_{tot}$ est la somme des capacités des condensateurs dans le demi-bras supérieur et où $t_m$ est un instant déterminé pour lequel l'énergie interne dans le demi-bras supérieur atteint la limite inférieure $W_{Lminu}^{\Sigma}$ et cet instant est obtenu par la formule:

$$t_m = \frac{1}{\omega}\left(\pi - \sin^{-1}(\frac{I_{diff}}{\sqrt{A_t^2 + B_t^2}}) - \tan^{-1}(\frac{B_t}{A_t})\right) + \frac{2k\pi}{\omega}$$

avec :

$$A_t = \sqrt{2}\omega C_{tot}V_v\cos\delta + \frac{I_g}{\sqrt{2}}\sin\theta$$

$$B_t = \sqrt{2}\omega C_{tot}V_v\sin\delta - \frac{I_g}{\sqrt{2}}\cos\theta$$

**13.** Convertisseur selon l'une quelconque des revendications **11** ou **12,** dans lequel le module de contrôle est configuré pour déterminer la limite supérieure $W_{Lmaxu}^{\Sigma}$ de l'énergie interne stockée dans les condensateurs des sous-modules d'un demi-bras supérieur du convertisseur selon la fonction:

$$W_{Lmaxu}^{\Sigma} = \frac{C_{tot}}{2}(NV_{smMax})^2 - W_{ru}^{\Sigma}(t_r)$$

où $C_{tot}$ est la somme des capacités des condensateurs dans le demi-bras, $V_{smMax}$ est la tension maximale tolérable d'un sous-module, $N$ est le nombre de sous-modules dans le demi-bras et où $t_r$ est un instant déterminé pour lequel l'énergie interne dans le demi-bras atteint la limite supérieure $W_{Lmaxu}^{\Sigma}$ et cet instant est obtenu par la formule :

$$t_r = \frac{1}{\omega}\left(\cos^{-1}(-\frac{\sqrt{2}I_{diff}}{I_g}) - \theta\right) + \frac{2k\pi}{\omega}$$

**14.** Convertisseur selon les revendications **2** et **3,** dans lequel le module de contrôle comporte un module de détermination (14) de ladite limite inférieure et de ladite limite supérieure de l'énergie interne stockée dans les condensateurs des sous-modules d'un demi-bras supérieur ou inférieur en fonction de ladite valeur de tension $v_g$ mesurée sur le réseau d'alimentation électrique alternatif, de ladite valeur de tension $V_{dc}$ mesurée sur le réseau d'alimentation électrique continu, de ladite consigne de puissance alternative active $P_{ac}^*$ , de ladite consigne de puissance alternative réactive $Q_{ac}^*$ et de ladite consigne de puissance continue $P_{dc}^*$ .

**15.** Convertisseur selon l'une quelconque des revendications **1** à **14,** dans lequel le module de contrôle comporte un module de correction (16) d'une consigne d'énergie interne en fonction de ladite limite supérieure et de ladite limite inférieure, fournies par le module de contrôle.

**16.** Procédé de contrôle d'un convertisseur de tension modulaire multi-niveaux (10), le convertisseur permettant de convertir une tension alternative en une tension continue et inversement, et comportant une partie dite continue destinée à être reliée à un réseau d'alimentation électrique continu et une partie dite alternative destinée à être reliée à un réseau d'alimentation électrique alternatif, le convertisseur comportant une pluralité de bras, chaque bras comportant un demi-bras supérieur et un demi-bras inférieur, chaque demi-bras comprenant une pluralité de sous-modules commandables individuellement par un organe de commande propre à chaque sous-module et chaque sous-module comprenant un condensateur connectable en série dans le demi-bras lorsque l'organe de commande est dans un état commandé,
**caractérisé en ce qu'**il comporte une étape de régulation de l'énergie interne stockée dans les condensateurs des sous-modules d'un demi-bras supérieur ou inférieur du convertisseur dans laquelle on limite ladite énergie interne en-dessous d'une limite supérieure et/ou au-dessus d'une limite inférieure, en utilisant des paramètres mesurés en temps réel sur le réseau d'alimentation électrique continu et sur le réseau d'alimentation électrique alternatif, ainsi que des consignes de puissance de fonctionnement du convertisseur, ladite limite supérieure et/ou ladite limite inférieure étant déterminées en utilisant des paramètres mesurés sur le réseau d'alimentation électrique continu et sur le réseau d'alimentation électrique alternatif, de façon à ce qu'elles évoluent avec l'état desdits réseaux d'alimentation électrique continu et alternatif, la limite inférieure et/ou la limite supérieure étant asservie(s) en temps réel.

**Patentansprüche**

**1.** Modularer Mehrpegel-Spannungsumrichter (10), welcher es gestattet, eine Wechselspannung in eine Gleichspannung und umgekehrt umzurichten, umfassend einen als kontinuierlich bezeichneten Teil (10A), der dazu bestimmt ist, mit einem elektrischen Gleichstrom-Versorgungsnetz (110) verbunden zu werden, und einen als wechselnd bezeichneten Teil (10C), der dazu bestimmt ist, mit einem elektrischen Wechselstrom-Versorgungsnetz (120) verbunden zu werden, wobei der Umrichter eine Vielzahl von Armen umfasst, wobei jeder Arm einen oberen Halbarm und einen unteren Halbarm umfasst, wobei jeder Halbarm eine Vielzahl von Untermodulen ($SM_{xij}$) umfasst, die einzeln durch ein zu jedem Untermodul gehörendes Steuerelement gesteuert werden können, und wobei jedes Untermodul einen Kondensator ($C_{SM}$) umfasst, der in Serie in dem Halbarm verbunden werden kann, wenn sich das Steuerelement des Untermoduls in einem gesteuerten Zustand befindet, **dadurch gekennzeichnet, dass** er ein Steuermodul (12) umfasst, das dafür ausgelegt ist, um die innere Energie, die in den Kondensatoren der Untermodule eines oberen oder unteren Halbarms des Umrichters gespeichert ist, zu regeln, wobei das Steuermodul dafür geeignet ist, die genannte innere Energie unter einer oberen Grenze und/oder über einer unteren Grenze zu begrenzen, unter Verwendung von Parametern, die in Echtzeit in dem elektrischen Gleichstrom-Versorgungsnetz und in dem elektrischen Wechselstrom-Versorgungsnetz gemessen werden, sowie Sollwerten der Betriebsleistung des Umrichters, wobei das Steuermodul dafür ausgelegt ist, um die genannte obere Grenze und/oder die genannte untere Grenze unter Verwendung von Parametern, die in dem elektrischen Gleichstrom-Versorgungsnetz und in dem elektrischen Wechselstrom-Versorgungsnetz gemessen werden, derart zu bestimmen, dass sie sich mit dem Zustand des genannten elektrischen Gleichstrom- und Wechselstrom-Versorgungsnetzes entwickeln, wobei die untere Grenze und/oder die obere Grenze in Echtzeit nachgeführt wird (werden).

2. Umrichter nach Anspruch 1, wobei die genannten Parameter, die in dem elektrischen Gleichstrom-Versorgungsnetz und in dem elektrischen Wechselstrom-Versorgungsnetz gemessen werden, einen Spannungswert $v_g$, der in dem elektrischen Wechselstrom-Versorgungsnetz gemessen wird, und einen Spannungswert $v_{dc}$, der in dem elektrischen Gleichstrom-Versorgungsnetz gemessen wird, umfassen.

3. Umrichter nach einem der Ansprüche 1 oder 2, wobei die Sollwerte der Betriebsleistung des Umrichters einen Sollwert der aktiven Wechselstromleistung $P_{ac}^*$, einen Sollwert der reaktiven Wechselstromleistung $Q_{ac}^*$, und einen Sollwert der Gleichstromleistung $P_{dc}^*$ umfassen.

4. Umrichter nach den Ansprüchen 2 und 3, wobei das Steuermodul (12) dafür ausgelegt ist, um Zwischenvariablen als Funktion der genannten Parameter, die in dem elektrischen Gleichstrom-Versorgungsnetz und in dem elektrischen Wechselstrom-Versorgungsnetz gemessen werden, sowie als Funktion der genannten Sollwerte der Betriebsleistung des Umrichters zu berechnen.

5. Umrichter nach Anspruch 4, wobei die Zwischenvariablen eine Variable des äquivalenten Differentialstroms $I_{diff}$ umfassen, die den Beitrag durch eine Phase, in einem äquilibrierten dreiphasigen System, zu dem Strom des elektrischen Gleichstrom-Versorgungsnetzes im stationären Zustand darstellt, bestimmt mit Hilfe der Funktion:

$$I_{diff} = \frac{P_{dc}}{3V_{dc}}$$

6. Umrichter nach Anspruch 5, wobei die Zwischenvariablen eine Variable der äquivalenten Differentialspannung $V_{diff}$ umfassen, welche die Spannung an den Anschlüssen des kontinuierlichen Teils des Umrichters im stationären Zustand darstellt, bestimmt mit Hilfe der Funktion:

$$V_{diff} = \frac{V_{dc}}{2} - I_{diff}R_{arm}$$

wobei $R_{arm}$ der Widerstand in einem Halbarm des Umrichters ist.

7. Umrichter nach einem der Ansprüche 4 bis 6, wobei die Zwischenvariablen eine Variable des äquivalenten Zwischenstroms $I_g$ umfassen, die den Strom darstellt, der zu dem elektrischen Wechselstrom-Versorgungsnetz im stationären Zustand zirkuliert, bestimmt mit Hilfe der Funktion:

$$I_g = \frac{\sqrt{P_{ac}^2 + Q_{ac}^2}}{3V_g}$$

wobei $V_g$ die Spannung des elektrischen Wechselstrom-Versorgungsnetzes im stationären Zustand darstellt.

8. Umrichter nach einem der Ansprüche 4 bis 7, wobei die Zwischenvariablen eine Variable der Phasenverschiebung $\theta$ zwischen dem Vektor der Spannung des elektrischen Wechselstrom-Versorgungsnetzes und dem Vektor des Stroms, der zu dem elektrischen Wechselstrom-Versorgungsnetz zirkuliert, umfassen.

9. Umrichter nach einem der Ansprüche 4 bis 8, wobei die Zwischenvariablen eine Zwischenwinkelvariable $\delta$ umfassen, welche die Phasenverschiebung zwischen dem Vektor der Spannung des elektrischen Wechselstrom-Versorgungsnetzes im stationären Zustand und dem Vektor einer äquivalenten inneren Wechselspannung darstellt, die von dem Umrichter im stationären Zustand synthetisiert wird, wobei $\delta$ bestimmt wird mit Hilfe der Funktion:

$$\delta = \tan^{-1} \frac{X_{eq}P_{ac} - R_{eq}Q_{ac}}{R_{eq}P_{ac} + X_{eq}Q_{ac} + 3V_g^2}$$

wobei $V_g$ die Spannung des elektrischen Wechselstrom-Versorgungsnetzes im stationären Zustand ist, $R_{eq}$ der äquivalente Widerstand in einem Halbarm ist, und $X_{eq}$ die äquivalente Reaktanz in einem Halbarm ist.

10. Umrichter nach einem der Ansprüche 4 bis 9, wobei die Zwischenvariablen eine Variable der äquivalenten inneren Wechselspannung $V_v$ umfassen, die von dem Umrichter im stationären Zustand synthetisiert wird, mit Hilfe der Funktion:

$$V_v = \sqrt{(\frac{R_{eq}P_{ac} + X_{eq}Q_{ac}}{3V_g} + V_g)^2 + (\frac{X_{eq}P_{ac} - R_{eq}Q_{ac}}{3V_g})^2}$$

wobei $V_g$ die Spannung des elektrischen Wechselstrom-Versorgungsnetzes im stationären Zustand darstellt, $R_{eq}$ der äquivalente Widerstand in einem Halbarm ist, und $X_{eq}$ die äquivalente Reaktanz in einem Halbarm ist.

11. Umrichter nach einem der Ansprüche 5 bis 10, wobei das Steuermodul dafür ausgelegt ist, um die oszillatorische Komponente $W_{ru}^{\Sigma}(t)$ der inneren Energie, die in den Kondensatoren eines oberen Halbarms des Umrichters gespeichert ist, zu bestimmen mit Hilfe der Funktion:

$$W_{ru}^{\Sigma}(t) = -\frac{\sqrt{2}I_{diff}V_v}{\omega}\sin(\omega t + \delta) + \frac{\sqrt{2}I_g V_{diff}}{2\omega}\sin(\omega t + \theta)$$
$$-\frac{I_g V_v}{4\omega}\sin(2\omega t + \delta + \theta)$$

wobei $\omega$ die Pulsation ist.

12. Umrichter nach Anspruch 11, wobei das Steuermodul dafür ausgelegt ist, um die untere Grenze $W_{Lminu}^{\Sigma}$ der inneren Energie, die in den Kondensatoren der Untermodule eines oberen Halbarms des Umrichters gespeichert ist, zu bestimmen mit Hilfe der Funktion:

$$W_{Lminu}^{\Sigma} = \frac{C_{tot}}{2}\left(V_{diff} - \sqrt{2}V_v \cos(\omega t_m + \delta)\right)^2 - W_{ru}^{\Sigma}(t_m)$$

wobei $C_{tot}$ die Summe der Kapazitäten der Kondensatoren in dem oberen Halbarm ist, und wobei $t_m$ ein bestimmter Moment ist, für den die innere Energie in dem oberen Halbarm die untere Grenze $W_{Lminu}^{\Sigma}$ erreicht, und dieser Moment erhalten wird durch die Formel:

$$t_m = \frac{1}{\omega}\left(\pi - \sin^{-1}\left(\frac{I_{diff}}{\sqrt{A_t^2 + B_t^2}}\right) - \tan^{-1}\left(\frac{B_t}{A_t}\right)\right) + \frac{2k\pi}{\omega}$$

wobei:

$$A_t = \sqrt{2}\omega C_{tot} V_v \cos\delta + \frac{I_g}{\sqrt{2}}\sin\theta$$

$$B_t = \sqrt{2}\omega C_{tot} V_v \sin\delta - \frac{I_g}{\sqrt{2}}\cos\theta$$

**13.** Umrichter nach einem der Ansprüche 11 oder 12, wobei das Steuermodul dafür ausgelegt ist, um die obere Grenze $W_{Lmaxu}^{\Sigma}$ der inneren Energie, die in den Kondensatoren der Untermodule eines oberen Halbarms des Umrichters gespeichert ist, zu bestimmen gemäß der Funktion:

$$W_{Lmaxu}^{\Sigma} = \frac{C_{tot}}{2}(N V_{smMax})^2 - W_{ru}^{\Sigma}(t_r)$$

wobei $C_{tot}$ die Summe der Kapazitäten der Kondensatoren in dem Halbarm ist, $V_{smMax}$ die maximal zulässige Spannung eines Untermoduls ist, N die Anzahl von Untermodulen in dem Halbarm ist, und wobei $t_r$ wobei ein

bestimmter Moment ist, für den die innere Energie in dem Halbarm die obere Grenze $W_{Lmaxu}^{\Sigma}$ erreicht, und dieser Moment erhalten wird durch die Formel:

$$t_r = \frac{1}{\omega}\left(\cos^{-1}(-\frac{\sqrt{2}I_{diff}}{I_g}) - \theta\right) + \frac{2k\pi}{\omega}$$

**14.** Umrichter nach den Ansprüchen 2 und 3, wobei das Steuermodul ein Bestimmungsmodul (14) der genannten unteren Grenze und der genannten oberen Grenze der inneren Energie umfasst, die in den Kondensatoren der Untermodule eines oberen oder unteren Halbarms gespeichert ist, als Funktion des genannten Spannungswerts $v_g$, der in dem elektrischen Wechselstrom-Versorgungsnetz gemessen wird, des genannten Spannungswerts $V_{dc}$, der in dem elektrischen Gleichstrom-Versorgungsnetz gemessen wird, des genannten Sollwerts der aktiven Wechselstromleistung $P_{ac}^*$, des genannten Sollwerts der reaktiven Wechselstromleistung $Q_{ac}^*$ und des genannten Sollwerts der Gleichstromleistung $P_{dc}^*$.

**15.** Umrichter nach einem der Ansprüche 1 bis 14, wobei das Steuermodul ein Korrekturmodul (16) eines Sollwerts der inneren Energie umfasst, als Funktion der genannten oberen Grenze und der genannten unteren Grenze, die von dem Steuermodul geliefert werden.

**16.** Verfahren zum Steuern eines modularen Mehrpegel-Spannungsumrichters (10), wobei es der Umrichter gestattet, eine Wechselspannung in eine Gleichspannung und umgekehrt umzurichten, und einen als kontinuierlich bezeichneten Teil, der dazu bestimmt ist, mit einem elektrischen Gleichstrom-Versorgungsnetz verbunden zu werden, und einen als wechselnd bezeichneten Teil, der dazu bestimmt ist, mit einem elektrischen Wechselstrom-Versorgungsnetz verbunden zu werden, umfasst, wobei der Umrichter eine Vielzahl von Armen umfasst, wobei jeder Arm einen oberen Halbarm und einen unteren Halbarm umfasst, wobei jeder Halbarm eine Vielzahl von Untermodulen umfasst, die einzeln durch ein zu jedem Untermodul gehörendes Steuerelement gesteuert werden können, und wobei jedes Untermodul einen Kondensator umfasst, der in Serie in dem Halbarm verbunden werden kann, wenn sich das Steuerelement des Untermoduls in einem gesteuerten Zustand befindet,
**dadurch gekennzeichnet, dass** es einen Schritt des Regelns der inneren Energie, die in den Kondensatoren der Untermodule eines oberen oder unteren Halbarms des Umrichters gespeichert wird, umfasst, wobei die genannte innere Energie unter einer oberen Grenze und/oder über einer unteren Grenze begrenzt wird, unter Verwendung von Parametern, die in Echtzeit in dem elektrischen Gleichstrom-Versorgungsnetz und in dem elektrischen Wechselstrom-Versorgungsnetz gemessen werden, sowie Sollwerten der Betriebsleistung des Umrichters, wobei die genannte obere Grenze und/oder die genannte untere Grenze unter Verwendung von Parametern, die in dem elektrischen Gleichstrom-Versorgungsnetz und in dem elektrischen Wechselstrom-Versorgungsnetz gemessen werden, derart bestimmt wird (werden), dass sie sich mit dem Zustand des genannten elektrischen Gleichstrom- und Wechselstrom-Versorgungsnetzes entwickeln, wobei die untere Grenze und/oder die obere Grenze in Echtzeit nachgeführt wird (werden).

**Claims**

1. A modular multilevel voltage converter (10) for converting an AC voltage into a DC voltage, and vice versa, the converter comprising a DC portion (10A) for connection to a DC power supply network (110) and an AC portion (10C) for connection to an AC power supply network (120), the converter comprising a plurality of legs, each leg comprising an upper arm and a lower arm, each arm comprising a plurality of submodules ($SM_{xij}$) that are individually controllable by a control member specific to each submodule, and each submodule comprising a capacitor ($C_{SM}$) connectable in series in the arm when the control member of the submodule is in an "on" state; the converter being **characterized in that** it includes a control module (12) configured to regulate the internal energy stored in the capacitors of the submodules of an upper or lower arm of the converter, the control module being suitable for limiting said internal energy to below an upper limit and/or to above a lower limit, by using parameters measured in real time on the DC power supply network and on the AC power supply network together with setpoints for the operating power of the converter, the control module being configured to determine the lower limit and/or the upper limit for the internal energy by using parameters measured on the DC power supply network and on the AC power supply network, such that they vary with the states of said power supply networks, the lower limit and/or the upper limit being servocontrolled in real time.

2. A converter according to claim 1, wherein said parameters measured on the DC power supply network and on the AC power supply network comprise a voltage value $v_g$ measured on the AC power supply network and a voltage value $V_{dc}$ measured on the DC power supply network.

3. A converter according to claim 1 or claim 2, wherein the setpoints for the operating power of the converter comprise an active AC power setpoint $P_{ac}^*$ , a reactive AC power setpoint $Q_{ac}^*$ , and a DC power setpoint $P_{dc}^*$ .

4. A converter according to claims 2 and 3, wherein the control module (12) is configured to calculate intermediate variables as a function of said parameters measured on the DC power supply network and on the AC power supply network and also as a function of said setpoints for the operating power of the converter.

5. A converter according to claim 4, wherein the intermediate variables include an equivalent differential current variable $I_{diff}$, representing the contribution of one phase in a balanced three-phase system to the current of the DC power supply network under steady conditions, as determined by means of the function:

$$I_{diff} = \frac{P_{dc}}{3V_{dc}}$$

6. A converter according to claim 5, wherein the intermediate variables include an equivalent differential voltage variable $V_{diff}$, representing the voltage across the terminals of the DC portion of the converter under steady conditions, as determined by means of the function:

$$V_{diff} = \frac{V_{dc}}{2} - I_{diff}R_{arm}$$

where $R_{arm}$ is the resistance in an arm of the converter.

7. A converter according to any one of claims 4 to 6, wherein the intermediate variables include an equivalent intermediate current variable $I_g$ representing the current flowing to the AC electrical power supply network under steady conditions, as determined by the function:

23

$$I_g = \frac{\sqrt{P_{ac}^2 + Q_{ac}^2}}{3V_g}$$

where $V_g$ represents the voltage of the AC power supply network under steady conditions.

8. A converter according to any one of claims 4 to 7, wherein the intermediate variables also include a phase shift variable $\theta$ for the phase difference between the voltage vector of the AC power supply network and the vector of the current flowing to the AC power supply network.

9. A converter according to any one of claims 4 to 8, wherein the intermediate variables include an intermediate angle variable $\delta$, representing the phase difference between the voltage vector of the AC power supply network under steady conditions and the vector of an equivalent AC internal voltage synthesized by the converter under steady conditions, $\delta$ being determined by means of the function:

$$\delta = \tan^{-1} \frac{X_{eq}P_{ac} - R_{eq}Q_{ac}}{R_{eq}P_{ac} + X_{eq}Q_{ac} + 3V_g^2}$$

where $V_g$ is the voltage of the AC power supply network under steady conditions, $R_{eq}$ is the equivalent resistance in an arm, and $X_{eq}$ is the equivalent reactance in an arm.

10. A converter according to any one of claims 4 to 9, wherein the intermediate variables include an equivalent AC internal voltage variable $V_v$ as synthesized by the converter under steady conditions by means of the function:

$$V_v = \sqrt{\left(\frac{R_{eq}P_{ac} + X_{eq}Q_{ac}}{3V_g} + V_g\right)^2 + \left(\frac{X_{eq}P_{ac} - R_{eq}Q_{ac}}{3V_g}\right)^2}$$

where $V_g$ is the voltage of the AC power supply network under steady conditions, $R_{eq}$ is the equivalent resistance in an arm, and $X_{eq}$ is the equivalent reactance in an arm.

11. A converter according to any one of claims 5 to 10, wherein the control module is configured to determine the oscillating component $W_{ru}^{\Sigma}(t)$ of the internal energy stored in the capacitors of an upper arm of the converter by means of the function:

$$W_{ru}^{\Sigma}(t) = -\frac{\sqrt{2}I_{diff}V_v}{\omega}\sin(\omega t + \delta) + \frac{\sqrt{2}I_g V_{diff}}{2\omega}\sin(\omega t + \theta) \\ - \frac{I_g V_v}{4\omega}\sin(2\omega t + \delta + \theta)$$

where $\omega$ is angular frequency.

12. A converter according to claim 11, wherein the control module is configured to determine the oscillating component $W_{Lminu}^{\Sigma}$ of the internal energy stored in the capacitors of the submodules of an upper arm of the converter by means of the function:

$$W_{Lminu}^{\Sigma} = \frac{C_{tot}}{2}\left(V_{diff} - \sqrt{2}V_v\cos(\omega t_m + \delta)\right)^2 - W_{ru}^{\Sigma}(t_m)$$

where $C_{tot}$ is the sum of the capacitances of the capacitors in the upper arm and where $t_m$ is a determined instant at which the internal energy in the upper arm reaches the lower limit $W^{\Sigma}_{Lminu}$ , with this instant being obtained by the formula:

$$t_m = \frac{1}{\omega}\left(\pi - \sin^{-1}\left(\frac{I_{diff}}{\sqrt{A_t^2 + B_t^2}}\right) - \tan^{-1}\left(\frac{B_t}{A_t}\right)\right) + \frac{2k\pi}{\omega}$$

with:

$$A_t = \sqrt{2}\omega C_{tot}V_v\cos\delta + \frac{I_g}{\sqrt{2}}\sin\theta$$

$$B_t = \sqrt{2}\omega C_{tot}V_v\sin\delta - \frac{I_g}{\sqrt{2}}\cos\theta$$

**13.** A converter according to claim 11 or claim 12, wherein the control module is configured to determine the upper limit $W^{\Sigma}_{Lmaxu}$ for the internal energy stored in the capacitors of the submodules of an upper arm of the converter by means of the function:

$$W^{\Sigma}_{Lmaxu} = \frac{C_{tot}}{2}(NV_{smMax})^2 - W^{\Sigma}_{ru}(t_r)$$

where $C_{tot}$ is the sum of the capacitances of the capacitors in the arm, $V_{smMax}$ is the maximum voltage that is acceptable in a submodule, N is the number of submodules in the arm, and where $t_r$ is a determined instant at which the internal energy in the arm reaches the upper limit $W^{\Sigma}_{Lmaxu}$ , with this instant being obtained by the formula:

$$t_r = \frac{1}{\omega}\left(\cos^{-1}\left(-\frac{\sqrt{2}I_{diff}}{I_g}\right) - \theta\right) + \frac{2k\pi}{\omega}$$

**14.** A converter according to claims 2 and 3, wherein the control module includes a determination module (14) for determining said lower limit and said upper limit for the internal energy stored in the capacitors of the submodules of an upper or lower arm as a function of said voltage value $v_g$ as measured on the AC power supply network, of said voltage value $V_{dc}$ as measured on the DC power supply network, of said active AC power setpoint $P^*_{ac}$ , of said reactive AC power setpoint $Q^*_{ac}$ , and of said DC power setpoint $P^*_{dc}$ .

**15.** A converter according to any one of claims 1 to 14, wherein the control module includes a correction module (16) for correcting an internal energy setpoint as a function of said upper limit and of said lower limit, as supplied by the control module.

**16.** A method of controlling a modular multilevel voltage converter (10) for converting an AC voltage into a DC voltage, and vice versa, the converter comprising a DC portion for connection to a DC power supply network and an AC portion for connection to an AC power supply network, the converter comprising a plurality of legs, each leg comprising an upper arm and a lower arm, each arm comprising a plurality of submodules that are individually controllable by a control member specific to each submodule, and each submodule comprising a capacitor connectable in series in the arm when the control member of the submodule is in an "on" state; the method being **characterized in that** it includes a step of regulating the internal energy stored in the capacitors of the submodules of an upper or lower arm of the converter, in which said internal energy is limited to below an upper limit and/or to above a lower limit, by using parameters measured in real time on the DC power supply network and on the AC power supply network, together with setpoints for the operating power of the converter, said lower limit and/or said upper limit for the internal energy being determined by using parameters measured on the DC power supply network and on the AC power supply network, such that they vary with the states of said power supply networks, the lower limit and/or the upper limit being servocontrolled in real time.

**FIG.1**

ART ANTERIEUR

FIG.2

ART ANTERIEUR

$$n/N = m$$

FIG.3

ART ANTERIEUR

FIG.4
ART ANTERIEUR

EP 3 482 487 B1

FIG.5

FIG.6

FIG.7

EP 3 482 487 B1

FIG.8

FIG.9A

## FIG.9B

## FIG.10A

FIG.10B

FIG.11

FIG.12A

FIG.12B

FIG.13A

FIG.13B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015062991 A

**Littérature non-brevet citée dans la description**

- **GUO JIE et al.** Energy storable VSC-HVDC system based on modular multilevel converter. *INTERNATIONAL JOURNAL OF ELECTRICAL POWER & ENERGY SYSTEMS, JORDAN HILL, OXFORD, GB,* 17 Décembre 2015, vol. 78, 269-276

- **S. SAMIMI et al.** Control of DC bus voltage with a Modular Multilevel Converter. *2015 IEEE EINDHOVEN POWERTECH,* 01 Juin 2015, 1-6